(19) Europäisches Patentamt
European Patent Office
Office européen des brevets

(11) **EP 4 672 688 A1**

(12) **EUROPEAN PATENT APPLICATION**

(43) Date of publication:
**31.12.2025 Bulletin 2026/01**

(21) Application number: **25185130.9**

(22) Date of filing: **25.06.2025**

(51) International Patent Classification (IPC):
**H04L 27/26** (2006.01)    **H04W 84/12** (2009.01)

(52) Cooperative Patent Classification (CPC):
**H04W 84/12; H04L 27/2602**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.06.2024 US 202463633918 P**

(71) Applicant: **Comcast Cable Communications, LLC
Philadelphia, PA 19103 (US)**

(72) Inventors:
• **LANANTE, Leonardo Alisasis
Philadelphia, 19103 (US)**
• **KIM, Jeongki
Philadelphia, 19103 (US)**
• **DINAN, Esmael Hejazi
Philadelphia, 19103 (US)**
• **ZHANG, Jiayi
Philadelphia, 19103 (US)**
• **ERKUCUK, Serhat
Philadelphia, 19103 (US)**
• **BAYKAS, Tuncer
Philadelphia, 19103 (US)**

(74) Representative: **V.O.
P.O. Box 87930
2508 DH Den Haag (NL)**

(54) **COMPRESSED LONG RANGE PHYSICAL LAYER PROTOCOL DATA UNIT (PPDU)**

(57)     A station may send a data unit to an access point. A preamble of the data unit may be used for estimating a channel associated with sending the data unit. Predetermined parameters (e.g., as indicated by the access point) may be used in the preamble, such that improved channel estimation and/or reduced overhead may be realized, for example, in a long-range data transmission.

1700

**FIG. 17**

EP 4 672 688 A1

## Description

CROSS-REFERENCE TO RELATED APPLICATIONS

This application claims the benefit of U.S. Provisional Application No. 63/663,918, filed on June 25, 2024. The above referenced application is hereby incorporated by reference in its entirety.

BACKGROUND

An access point communicates with stations. Data units are communicated between the access point and stations.

SUMMARY

The following summary presents a simplified summary of certain features. The summary is not an extensive overview and is not intended to identify key or critical elements.

An access point may communicate with one or more computing devices, such as stations, via a plurality of channels. A preamble may be used for channel estimation. A station may use predetermined parameters in a preamble when sending data, such as extended long-range data (e.g., an ELR PPDU). The predetermined parameters may be indicated, for example, by an access point, before the data are sent. Improved channel estimation may be realized, for example, in a long-range data transmission. Redundant information for channel estimation may not be needed in the preamble (e.g., of an ELR PPDU), which may reduce overhead of the data transmission.

These and other features and advantages are described in greater detail below.

BRIEF DESCRIPTION OF THE DRAWINGS

Examples of several of the various embodiments of the present disclosure are described herein with reference to the drawings.

FIG. 1 shows example wireless communication networks.

FIG. 2 shows a block diagram showing example implementations of a station (STA) and an access point (AP).

FIG. 3 shows examples of a Physical Layer Protocol Data Unit (PPDU), such as a non-High Throughput (non-HT) PPDU.

FIG. 4 shows examples of a PPDU, such as a High Efficiency (HE) Single User (SU) PPDU.

FIG. 5 shows an example of a PPDU, such as an Extremely High Throughput (EHT) Multi-user (MU) PPDU.

FIG. 6 shows an example universal signal (U-SIG) field which may be used in an extended range (ER) PPDU.

FIG. 7 shows an example management frame.

FIG. 8 shows an example Link Measurement Request frame.

FIG. 9 shows an example trigger frame.

FIG. 10 shows an example Common Info field.

FIG. 11 shows an example application of a trigger-based (TB) PPDU.

FIG. 12 shows an example non-HT Short Training field (L-STF) and an example non-HT Long Training field (L-LTF).

FIG. 13 shows an example extended/enhanced long range (ELR) PPDU.

FIG. 14 shows an example legacy preamble that may be used in an ELR PPDU.

FIG. 15 shows an example application of an ELR PPDU.

FIG. 16 shows an example ELR PPDU.

FIG. 17 shows an example application of an ELR PPDU.

FIG. 18 shows an example ELR field.

FIG. 19 shows an example of receiving a PPDU.

FIG. 20 shows an example of sending a PPDU.

FIG. 21 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

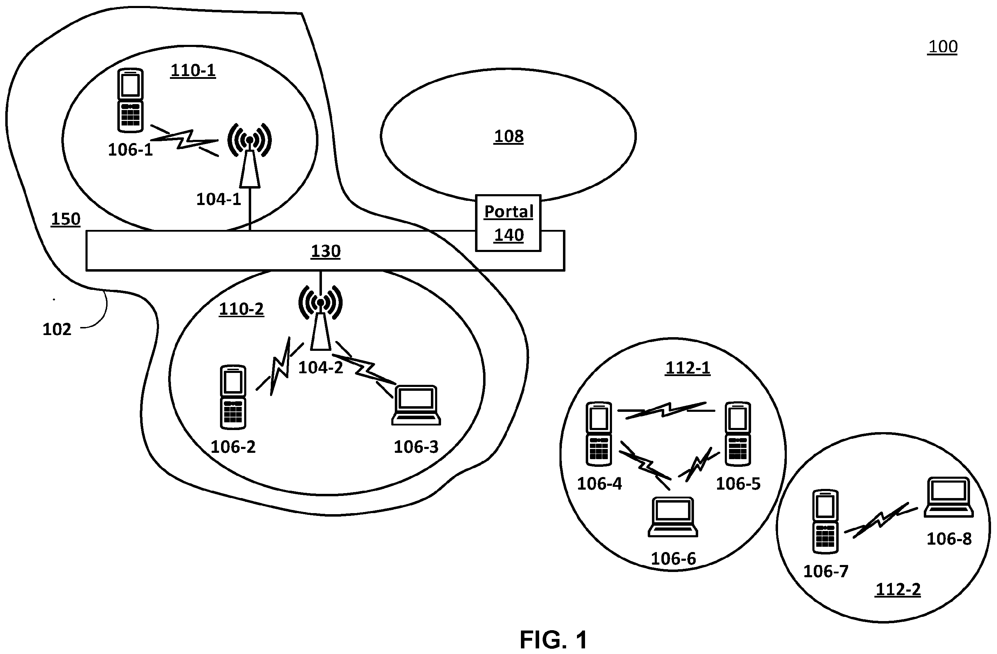

FIG. 1 shows example wireless communication network 100. The example wireless communication networks may be a wireless local area network (WLAN) 102.

The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station (STA)) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks shown in FIG. 1 may further include one or more ad-hoc networks or independent BSSs (IBSSs). An ad-hoc network or IBSS may be a network that includes a plurality of STAs that are within communication range of each other. The plurality of STAs may be configured so that the plurality of STAs may communicate with each other using direct peer-to-peer communication (e.g., not via an AP).

For example, STAs 106-4, 106-5, and 106-6, in FIG. 1, may be configured to form a first IBSS 112-1. STAs 106-7 and 106-8 may be configured to form a second IBSS 112-2. An IBSS may not include a centralized management entity. The IBSS may not include a centralized management entity, for example, if an IBSS does not include an AP. STAs within an IBSS may be managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the APs and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PLCP service data unit (PSDU). For example, the PSDU may include a PHY Convergence Protocol (PLCP) preamble and header and/or one or more MAC protocol data units (MPDUs). The information provided in the PHY preamble may be used by a receiving device to decode the subsequent data in the PSDU. The preamble fields may be duplicated and sent (e.g., transmitted) in each of the multiple component channels, in instances in which PPDUs are sent (e.g., transmitted) over a bonded channel (channel formed through channel bonding). The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The information provided in, and the format and coding of the non-legacy portion of the preamble may be based on the particular IEEE 802.11 protocol to be used to send (e.g., transmit) the payload.

A frequency band may include one or more subbands or frequency channels. For example, PPDUs conforming to the IEEE 802.11n, 802.11ac, 802.11ax and/or 802.11be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be formed through channel bonding. PPDUs may be sent (e.g., transmitted) over physical channels having bandwidths of 40 MHz, 80 MHz, 160 MHz, or 520 MHz by bonding together multiple 20 MHz channels.

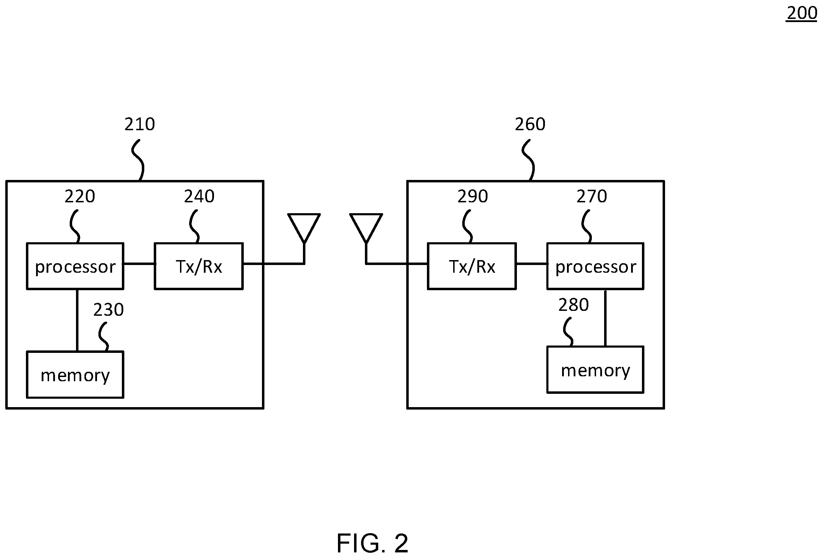

FIG. 2 is a block diagram 200 showing example implementations of a STA 210 and an AP 260. STA 210, as shown in FIG. 2, may include at least one processor 220, a memory 230, and at least one transceiver 240. AP 260 may include at least one processor 270, a memory 280, and at least one transceiver 290. Processor 220/270 may be operatively connected to memory 230/280 and/or to transceiver 240/290.

Processor 220/270 may implement functions of the PHY layer, the MAC layer, and/or the logical link control (LLC) layer of the corresponding device (STA 210 or AP 260). Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations discussed in the present application. Memory 230/280 may be implemented (or positioned) within processor 220/270 or external to processor 220/270. Memory 230/280 may be operatively connected to processor 220/270 via various means known in the art.

Transceiver 240/290 may be configured to send/transmit/receive radio signals. The transceiver 240/290 may implement a PHY layer of the corresponding device (STA 210 or AP 260). STA 210 and/or AP 260 may be a multi-link device (MLD), that is a device capable of operating over multiple links as defined by the IEEE 802.11 standard. STA 210 and/or AP 260 may each implement multiple PHY layers. The multiple PHY layers may be implemented using one or more of transceivers 240/290.

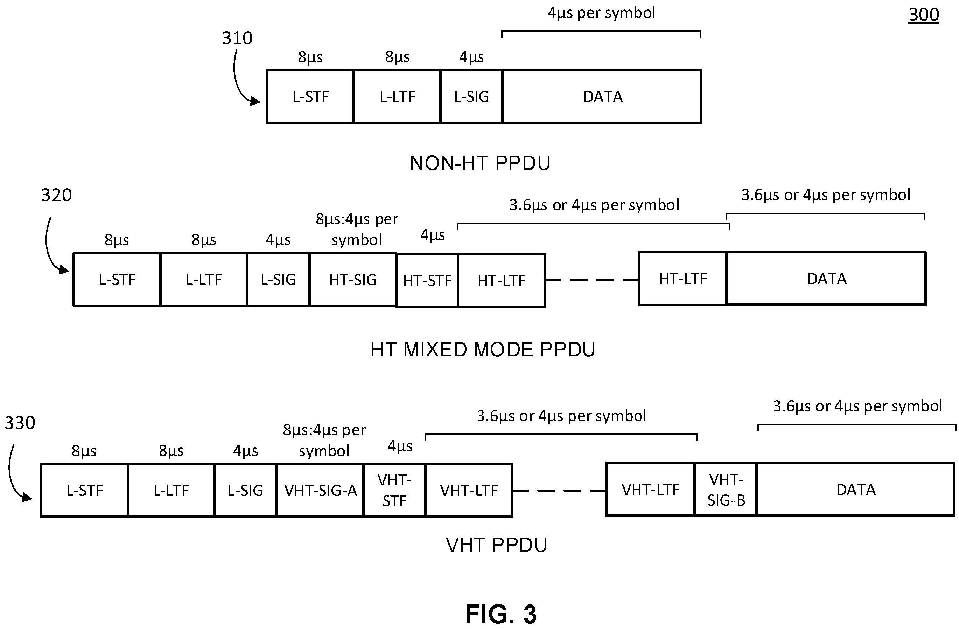

FIG. 3 shows examples of a PPDU, such as a non-High Throughput (non-HT) PPDU 310, a High Throughput (HT) mixed (mode) PPDU 320, and a Very High Throughput (VHT) PPDU 330.

Non-HT PPDU 310 may be used by STAs conforming to one or more standards (e.g., the IEEE 802.11a standard amendment). As shown in FIG. 3, non-HT PPDU 310 may include a non-HT Short Training field (L-STF), a non-HT Long Training field (L-LTF), a non-HT Signal field (L-SIG), and a Data field. The L-STF, L-LTF, and L-SIG fields may form a preamble (e.g., a 20 μs preamble) of non-HT PPDU 310.

The L-STF may be used by a receiver of non-HT PPDU 310 to synchronize with the carrier frequency and frame timing of a transmitter of non-HT PPDU 310 and to adjust the receiver signal gain. The L-LTF may be used by the receiver of non-HT PPDU 310 to determine (e.g., estimate) channel coefficients, for example, to equalize the channel response (e.g., amplitude and phase distortion) in both the L-SIG field and the Data field of non-HT PPDU 310.

The L-SIG may contain parameters needed to demodulate the Data field. The Data field may contain a payload of non-HT PPDU 310. The L-SIG may be processed to generate demodulation parameters of the Data field. For example, the L-SIG may be equalized using the channel coefficients determined/estimated using the L-LTF and/or demodulated to obtain the demodulation parameters of the Data field. The Data field may comprise one or more symbols each having a duration of 4 μs (or any other value). A part of the duration may carry symbol information and a remaining part of the duration may carry a Guard Interval (GI). For example, 3.2 μs may carry symbol information and 0.8 μs may carry a GI, for example, if the duration is 4 μs.

For non-HT PPDUs, the supported (e.g., only supported) bandwidth may be 20 MHz, which may be divided into 64 subcarriers. As such, non-HT PPDU 310 may be encoded using a subcarrier spacing of 20MHz/64 or 312.5kHz.

HT mixed mode PPDU 320 may be used by STAs conforming to one or more standards (e.g., the IEEE 802.11n standard amendment). HT mixed mode PPDU 320 may support MIMO and enhance spectral efficiency. For example, HT mixed mode PPDU 320 may support MIMO to up to 4 spatial streams, which may enhance spectral efficiency four folds. HT mixed mode PPDU 320 may have a minimum preamble duration. The minimum preamble duration may increase, for example, based on the number/quantity of spatial streams carried by the PPDU. For example, HT mixed mode PPDU 320 may have a minimum preamble duration of 35.6 μs (or any other value), which may increase depending on the number/quantity of spatial streams carried by the PPDU.

As shown in FIG. 3, HT mixed mode PPDU 320 may include an L-STF, an L-LTF, an L-SIG, an HT Signal field (HT-SIG), an HT Short Training field (HT-STF), one or more HT Long Training field (HT-LTF), and a Data field. The HT-LTF field and the Data field may comprise one or more symbols each having a duration of 3.6 μs or 4 μs (or any other values). A fixed length of duration may be used for carrying symbol information, for example, under different lengths of durations. The remaining length of duration may be used for carrying a GI. For example, for each symbol having a duration of 3.6 μs or 4 μs as described herein, 3.2 μs may carry symbol information while the remaining 0.4 μs or 0.8 μs may carry a GI. The 0.4 μs long GI may be called short GI while the 0.8 μs long GI may be called regular or normal GI.

For HT mixed mode PPDUs, two bandwidths, 20 MHz and 40 MHz, may be supported. A band may be divided into 64 subcarriers, for example, if/when the PPDU bandwidth is 20MHz. A band may be divided into 128 subcarriers, for example, if/when the PPDU bandwidth is 40 MHz. In both cases, a subcarrier spacing of 312.5 kHz may be maintained.

VHT PPDU 330 may be used by STAs conforming to the IEEE 802.11ac standard amendment. VHT PPDU 330 may support MIMO transmission and enhance spectral efficiency. For example, VHT PPDU 330 may support MIMO transmission to up to 8 spatial streams, which may enhance spectral efficiency eight folds. VHT PPDU 330 may have a minimum preamble duration. The minimum preamble duration may increase, for example, based on the number/quantity of spatial streams carried by VHT PPDU 330. For example, VHT PPDU 330 may have a minimum preamble duration of 39.6 μs, which may increase depending on the number/quantity of spatial streams carried by VHT PPDU 330.

As shown in FIG. 3, VHT PPDU 330 may include an L-STF, an L-LTF, an L-SIG, a VHT Signal A field (VHT-SIG-A), a VHT Short Training field (VHT-STF), one or more VHT Long Training field (VHT-LTF), a VHT Signal B field (VHT-SIG-B), and a Data field. The VHT-LTF field and the Data field of VHT PPDU 330 may comprise one or more symbols each having a duration of 3.6 μs or 4 μs (or any other value). Similar to HT mixed mode PPDU 320, for each symbol having a duration of 3.6 μs or 4 μs as described herein, 3.2 μs may carry symbol information while the remaining 0.4 μs or 0.8 μs may carry a GI. The 0.4 μs long GI may be called short GI while the 0.8μs long GI may be called regular or normal GI.

For VHT PPDUs, four bandwidths, 20 MHz, 40 MHz, 80 MHz, and 160 MHz, may be supported. The band may be divided into 64 subcarriers, for example, if/when the PPDU bandwidth is 20MHz. The band may be divided into 128 subcarriers, for example, if/when the PPDU bandwidth is 40 MHz. The band may be divided into 256 subcarriers, for example, if/when the PPDU bandwidth is 80MHz. The band may be divided into two 256-subcarrier 80MHz bands, for example, if/when the PPDU bandwidth is 160 MHz. In all cases, a subcarrier spacing of 312.5 kHz may be maintained.

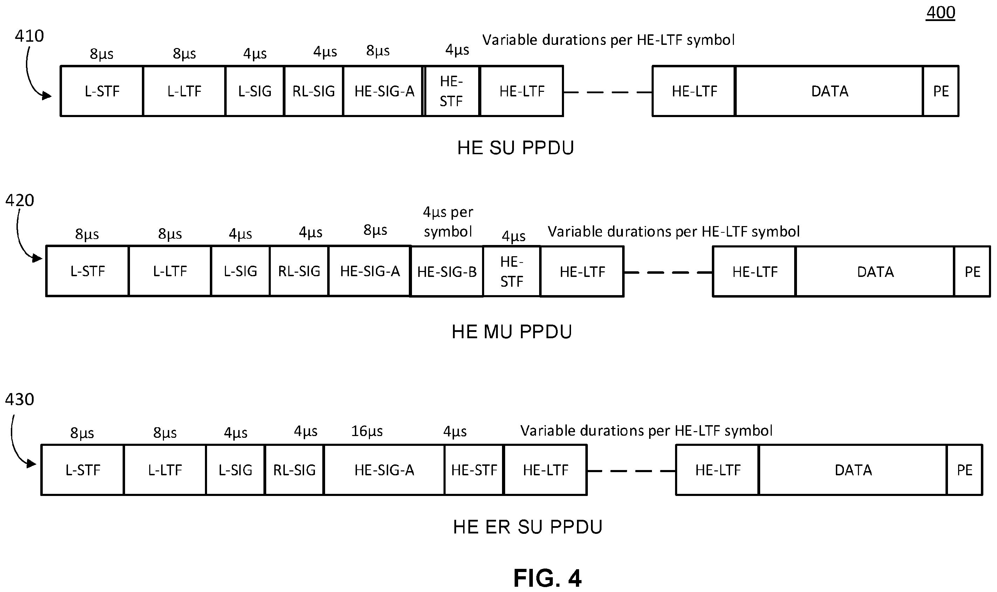

FIG. 4 shows examples of PPDU, such as a High Efficiency (HE) Single User (SU) PPDU 410, an HE Multi-User (MU) PPDU 420, and an HE Extended Range (ER) SU PPDU 430. HE SU PPDU 410, HE MU PPDU 420, and HE ER SU PPDU 430 may be used by STAs conforming to the IEEE 802.11ax standard amendment.

HE SU PPDU 410 may support higher spectral efficiency compared to VHT PPDU 330, for example, due to increased subcarrier spacing and/or higher order modulation support. HE SU PPDU 410 may have a minimum preamble duration of 44 μs (or any other value). As shown in FIG. 4, HE SU PPDU 410 may include an L-STF, an L-LTF, an L-SIG, a Repeated L-SIG field (RL-SIG), an HE Signal A field (HE-SIG-A), an HE Short Training field (HE-STF), one or more HE Long Training fields (HE-LTF), a Data field, and a Packet Extension (PE) field.

Similar to HE SU PPDU 410, HE MU PPDU 420 may support higher spectral efficiency compared to VHT PPDU 330. HE MU PPDU 420 may also support OFDMA. HE MU PPDU 420 may allow for payloads of multiple users to be multiplexed in the frequency domain in the Data field, for example, due to denser subcarrier spacing (as in HE SU PPDU 410). HE MU PPDU 420 may support multiplexing the payload of a plurality of (e.g., up to 9) users in a single band (e.g., 20 MHz band). HE MU PPDU 420 may have a minimum preamble duration of 47.2 μs (or any other value), which may increase depending on the number/quantity of spatial streams carried by HE MU PPDU 420.

As shown in FIG. 4, HE MU PPDU 420 may include an L-STF, an L-LTF, an L-SIG, an RL-SIG, an HE-SIG-A field, an HE Signal B field (HE-SIG-B), an HE-STF field, one or more HE-LTF fields, a Data field, and a PE field. HE MU PPDU 420 may further include HE-SIG-B compared to HE SU PPDU 410. HE-SIG-B may contain indications per STA of RU allocations. A STA may use the indications in HE-SIG-B to locate its payload in HE MU PPDU 420.

For HE SU PPDU 410 and/or HE MU PPDU 420, the GI portion (e.g., duration) of the HE-LTF field and the Data field may be one of 0.8 μs, 1.6 μs, and 3.2 μs. An AP or STA may use a suitable GI duration depending on the channel conditions or capability of the target STA or AP.

For both HE SU PPDU 410 and HE MU PPDU 420, the information portion of the HE-LTF may be one of 3.2 μs, 6.4 μs, or 12.8 μs. A subcarrier spacing of the HE-LTF may depend on the information portion (e.g., duration) of the HE-LTF. For example, a subcarrier spacing of the HE-LTF may be 312.5 kHz, for example, if the information potion is 3.2 μs. A subcarrier spacing of the HE-LTF may be 156.25 kHz, for example, if the information portion is 6.4 μs. A subcarrier spacing of the HE-LTF may be 78.125 kHz, for example, if the information portion is 12.8 μs. Unlike the HE-LTF, the information portion of the Data field for both HE SU PPDU 410 and HE MU PPDU 420 may be a fixed value (e.g., is always 12.8 μs). A subcarrier spacing of the Data field may be a fixed value corresponding to the information portion (e.g., duration thereof). For example, a subcarrier spacing of the Data field is always 78.125 kHz corresponding to the duration of the information portion being 12.8 μs. When/if a/an (e.g., 3.2 μs or 6.4 μs long) HE-LTF is used by a transmitting STA to transmit/send HE SU PPDU 410 or HE MU PPDU 420, a receiving STA may be required to interpolate the channel estimates to a subcarrier spacing (e.g., a resolution of 78.125 kHz) to match the subcarrier spacing of the Data field.

As shown in FIG. 4, HE ER SU PPDU 430 may include an L-STF, an L-LTF, an L-SIG, an RL-SIG, an HE-SIG-A field, an HE-STF field, one or more HE-LTF fields, a Data field, and a PE field. HE ER SU PPDU 430 may have an HE-SIG-A field that is duplicated in the time domain, for example, compared to HE SU PPDU 410. For example, the HE-SIG-A field of the HE ER SU PPDU 430 may be 16 μs long instead of 8 μs long as in HE SU PPDU 410. As such, both L-SIG (duplicated using RL-SIG) and HE-SIG-A may be sent in duplicates, which may allow a receiving STA to combine the two copies to increase the energy of the received signal. This increased energy may result in an extended range of reception and may increase transmission reliability between the transmitting STA and the receiving STA.

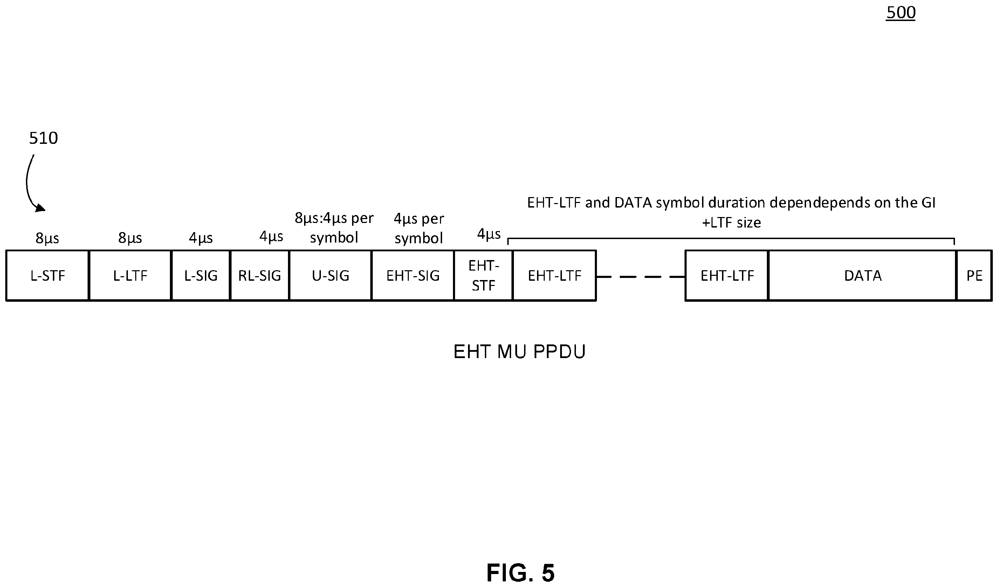

FIG. 5 shows an example of PPDU. More specifically, FIG. 5 shows an Extremely High Throughput (EHT) MU PPDU. EHT MU PPDU 510 may support OFDMA. For example, EHT MU PPDU 510 may support OFDMA up to a bandwidth of 320 MHz. EHT MU PPDU 510 may improve spectral efficiency, for example, due to support of a higher order modulation compared to other PPDUs (e.g., HE SU PPDU 410 and HE MU PPDU 420) while supporting the same number/quantity of spatial streams. EHT MU PPDU 510 may have a minimum preamble duration of 47.2 μs (or any other value), which may increase depending on the number/quantity of spatial streams carried by EHT MU PPDU 510.

As shown in FIG. 5, EHT MU PPDU 510 may include an L-STF, an L-LTF, an L-SIG, an RL-SIG, a Universal Signal field (U-SIG), an EHT Signal field (EHT-SIG), an EHT Short Training field (EHT-STF), one or more EHT Long Training fields (EHT-LTF), a Data field, and a PE field. EHT MU PPDU 510 may be used by a transmitting STA for both SU and MU transmissions, according to one or more standards, such as the IEEE 802.11be standard amendment and/or any earlier or later release and/or version.

The U-SIG may allow (e.g., ensure) forward compatibility of EHT MU PPDU 510. This may mean that any future PPDUs that are backward compatible to a standard such as IEEE 802.11be may contain the same U-SIG field and interpretation. For example, IEEE 802.11be STAs may be able to understand at least in part a PPDU developed in a future amendment.

The EHT-SIG may contain indications per STA of resource unit (RU) allocations. A STA may use the indications in the EHT-SIG to locate payload in EHT MU PPDU 510.

The GI portion of the EHT-LTF and Data fields of EHT MU PPDU 510 may be one of: 0.8 $\mu$s, 1.6 $\mu$s, or 3.2 $\mu$s. An AP or STA may use a suitable GI duration depending on the channel conditions or capability of the target STA or AP.

The information portion of the EHT-LTF may be one of 3.2 $\mu$s, 6.4 $\mu$s, or 12.8 $\mu$s. Depending on the information portion duration, a subcarrier spacing of the EHT-LTF may be one of: 312.5 kHz if the information potion is 3.2 $\mu$s, 156.25 kHz if the information portion is 6.4 $\mu$s, or 78.125 kHz if the information portion is 12.8 $\mu$s. The information portion of the Data field of EHT MU PPDU 510 may be always 12.8 $\mu$s. A subcarrier spacing of the Data field may be always 78.125 kHz corresponding to the duration of the information portion being 12.8 $\mu$s. When/if a 3.2 $\mu$s long or a 6.4 $\mu$s long EHT-LTF is used by a transmitting STA to send (e.g., transmit) EHT MU PPDU 510, a receiving STA may be required to interpolate the channel estimates to a subcarrier spacing resolution of 78.125 kHz to match the Data field subcarrier spacing.

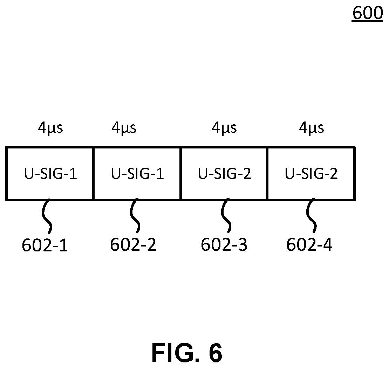

FIG. 6 shows an example universal signal (U-SIG) field. More specifically, FIG. 6 shows an example U-SIG field 600 which may be used in an extended range (ER) PPDU. U-SIG field 600 may be used in an ER preamble of the ER PPDU. As shown in FIG. 6, the example U-SIG field 600 may include four orthogonal frequency division multiplexing (OFDM) symbols 602-1, 602-2, 602-3, and 602-4 (each having a length of 4 microseconds). The coded bits of symbol 602-1 are identical to the coded bits of symbol 602-2, and the coded bits of symbol 602-3 are identical to the coded bits of symbol 602-4. The encoded bits in symbols 602-1 and 602-3 may be interleaved, and the encoded bits in symbols 602-1 and 602-4 may not be interleaved, for example, for better frequency diversity. The constellation mapping of U-SIG field 600 in an ER preamble may be the same as that of the HE-SIG-A field in an HE ER SU PPDU (e.g., HE ER SU PPDU 430).

An EHT STA that receives an ER PPDU with an ER preamble including U-SIG field 600 may decode and interpret the version independent fields in U-SIG field 600. The version independent fields in U-SIG field 600 may be introduced in IEEE 802.11 PHY clauses defined for 2.4, 5, and 6 GHz for EHT PHY onwards. Regardless of the value of a PHY version identifier field in U-SIG field 600, the EHT STA may defer for the duration of the ER PPDU, report the information from the version independent fields within a receive vector (e.g., RXVECTOR), and/or terminate the reception of the ER PPDU.

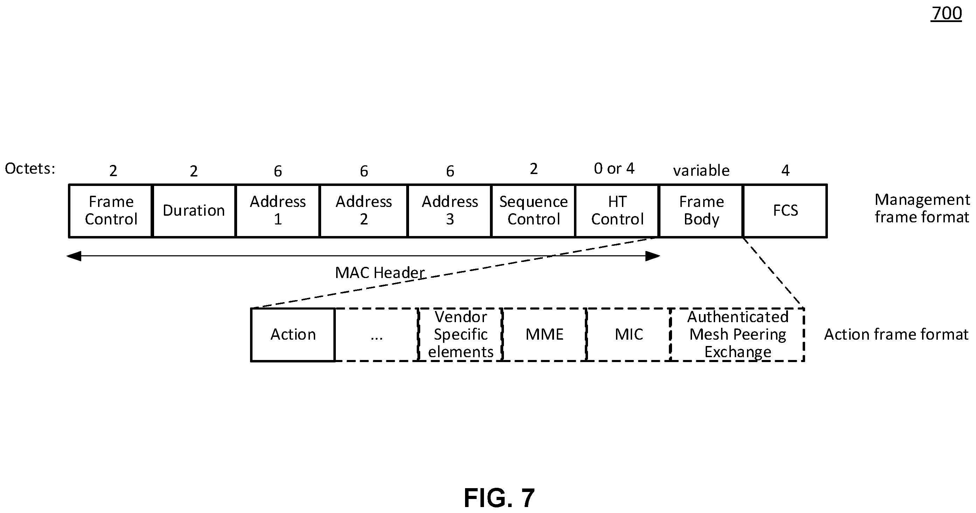

FIG. 7 shows an example management frame. More specifically, FIG. 7 shows an example management frame 700 which may be used as an action frame. A management frame 700 may include a MAC header, a variable length frame body, and a frame check sequence (FCS). The MAC header may include a frame control field, a duration field, an address 1 field, an address 2 field, an address 3 field, a sequence control field, and an optional HT control field. The presence of the HT control field may be determined by the setting of the frame control field. For example, the presence of the HT control field may be determined by the setting of a subfield (e.g., +HTC subfield) of the frame control field. As shown in FIG. 7, when/if used as an action frame, the frame body of the management frame may include an action field, a vendor specific elements field, management message integrity code element (MME), message integrity code (MIC), and an authenticated mesh peering exchange element.

The action field may include a category field and an action details field. The action field may provide a mechanism for specifying extended management actions. The category field may indicate a category of the action frame. The action details field may contain the details of the action requested by the action frame.

The MME may be present, for example, when/if management frame protection is negotiated. The MME may be present, for example, when/if the frame is a group addressed robust Action frame. The MME may be present, for example, when/if the category of the action frame does not support group addressed privacy as indicated by category values (e.g., mesh basic service set (MBSS) only). The MME might not be present in other situations. The MIC element may be present in a self-protected action frame, for example, if a shared pairwise master key (PMK) exists between the sender and recipient of this frame. The MIC might not be present in other situations.

The authenticated mesh peering exchange element may be present in a self-protected action frame, for example, if a shared PMK exists between the sender and recipient of this frame. The authenticated mesh peering exchange might not be present in other situations.

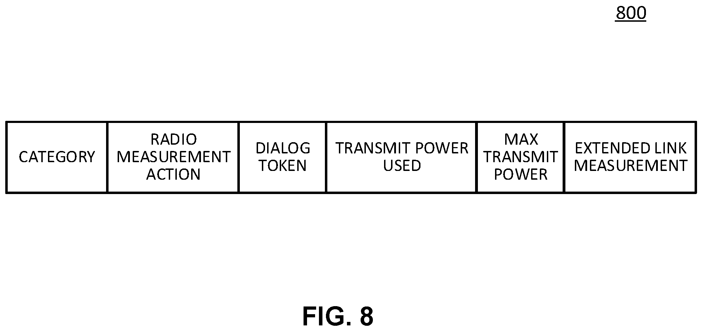

FIG. 8 shows an example Link Measurement Request frame 800. A Link Measurement Request frame 800 may be sent (e.g., transmitted) by a first STA to request a second STA to respond with a Link Measurement Report frame. The first STA may use the Link Measurement Report frame to measure link pathloss and to estimate link margin. A Link Measurement Request frame 800 may be an Action frame, for example, in a non-directional multi-gigabit (non-DMG) BSS. A Link Measurement Request frame 800 may be an Action frame or an Action No Ack frame, for example, in a directional multi-gigabit (DMG) BSS. As shown in FIG. 8, a Link Measurement Request frame 800 may include a Category field, a Radio Measurement Action field, a Dialog Token field, a Transmit Power Used field, a Max Transmit Power field, and an optional Extended Link Measurement field.

The Category field may indicate a category of Link Measurement Request frame 800. The Category field may be set to a value (e.g., 5). For example, the Category field may be set to a value (e.g., 5) that may identify the category of Link Measurement Request frame 800 as a Radio Measurement Action frame.

The Radio Measurement Action field may indicate an action frame format of Link Measurement Request frame 800 from among a plurality of action frame formats defined for radio measurement purposes. The Radio Measurement Action field may be set to a value (e.g., 2). For example, the Radio Measurement Action field may be set to a value (e.g., 2) that may identify the action frame format of Link Measurement Request frame 800 as a Link Measurement Request frame.

The Dialog Token field may be set to a nonzero value chosen by the first STA sending (e.g., transmitting) Link Measurement Request frame 800. The value of the Dialog Token field may identify a dialog comprising Link Measurement Request frame 800 and a corresponding Link Measurement Report frame. The value of the Dialog Token field may allow a STA to group management frames sent or received at different times as part of the same dialog.

The Transmit Power Used field may be set to a transmit power used to send (e.g., transmit) Link Measurement Request frame 800. The Transmit Power Used field may indicate the actual power used by an STA (e.g., the first STA) for sending (e.g., transmitting) Link Measurement Request frame 800. The Transmit Power Used field may indicate the actual power used as measured at an antenna connector, in units of dBm. The value of the Transmit Power Used field may be determined any time, for example, prior to sending Link Measurement Request frame 800. The value of the Transmit Power Used field may have a tolerance of ± 5 dB.

The Max Transmit Power field may provide an upper limit on the transmit power as measured at an antenna connector to be used by an STA (e.g., the first STA) on a current channel. The value of the Max Transmit Power field may be set to the minimum/lowest of the maximum powers at which the STA (e.g., the first STA) is permitted to send (e.g., transmit) on the current channel by device capability, policy, and regulatory authority.

The Extended Link Measurement field is optionally present. When/if present, the Extended Link Measurement field may contain an Extended Link Measurement element. The Extended Link Measurement element may include further information that may be used to solicit a link measurement report.

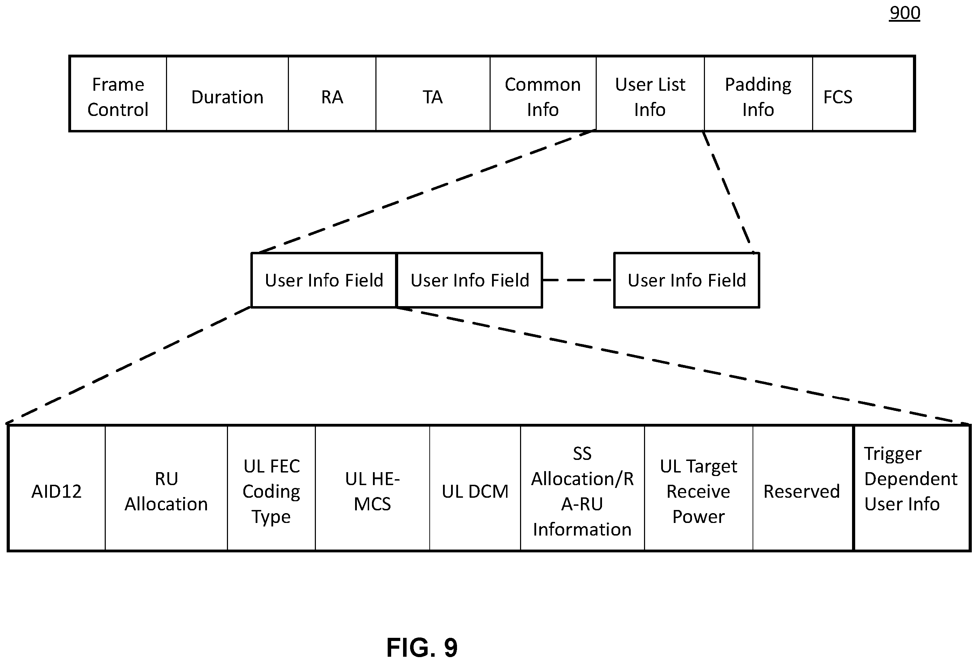

FIG. 9 shows an example trigger frame 900. Trigger frame 900 may correspond to a basic trigger frame as defined in the at least some IEEE 802.11 ax standard amendment. Trigger frame 900 may be used by an AP to allocate resources for and solicit one or more trigger-based (TB) PPDU transmissions from one or more STAs. Trigger frame 900 may also carry other information required by a responding STA to send (e.g., transmit) a TB PPDU to the AP.

Trigger frame 900, as shown in FIG. 9, may include a Frame Control field, a Duration field, a receiver address (RA) field, a transmitter address (TA) field, a Common Info field, a User Info List field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 16 least significant bits (LSB), and the 2 most significant bits (MSB) are both set to 1. The Duration field, in other frames sent by STAs, may contain a duration value (in microseconds) which is used by a recipient to update a network allocation vector (NAV).

The RA field may be the address of the STA that is intended to receive the incoming transmission from the transmitting station. The TA field may be the address of the STA sending (e.g., transmitting) trigger frame 900 if trigger frame 900 is addressed to STAs that belong to a single BSS. The TA field may be the sent (e.g., transmitted) BSSID if the trigger frame 900 is addressed to STAs from at least two different BSSs of the multiple BSSID set.

The Common Info field may have a format as shown by common info field 1000 described further below. The common info field may specify a trigger frame type of trigger frame 900, a transmit power of trigger frame 900 in dBm, and several key parameters of a TB PPDU that is sent (e.g., transmitted) by a STA in response to trigger frame 900. The trigger frame type of a trigger frame used by an AP to receive QoS data using UL MU operation may be referred to as a basic trigger frame.

The User List Info field may contain a User Info field per STA addressed in trigger frame 900. The per STA User Info field may include, among others, an AID subfield, an RU Allocation subfield, a Spatial Stream (SS) Allocation subfield, a modulation and coding scheme (MCS) subfield to be used by a STA in a TB PPDU, and a Trigger Dependent User Info subfield. The TB PPDU may be sent (e.g., transmitted), for example, based on (e.g., in response to) trigger frame 900. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field may be optionally present in trigger frame 900 to extend the frame length to give recipient STAs enough time to prepare a response for transmission one SIFS (short interframe spacing) after the frame is received. The Padding field, if present, may be at least two octets in length and may be set to all 1s. The FCS field may be used by a STA to validate a received frame and to interpret certain fields from the MAC headers of a frame.

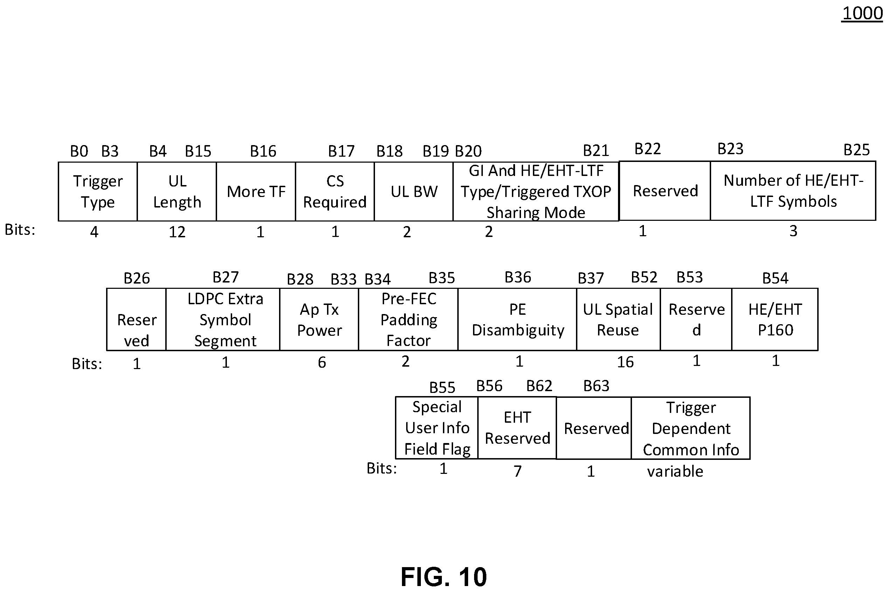

FIG. 10 shows an example Common Info field 1000. Common Info field 1000 may be similar to the Common Info field of trigger frame 900 or an MU-RTS trigger frame. Common Info field 1000, as shown in FIG. 10, may include a Trigger Type subfield, a UL Length subfield, a More TF subfield, a CS required subfield, a UL BW subfield, a GI and HE/EHT-LTF Type/Triggered TXS Mode subfield, a first Reserved subfield, a Number of HE/EHT-LTF Symbols subfield, a second Reserved subfield, an LDPC Extra Symbol Segment subfield, an AP Tx Power subfield, a Pre-FEC Padding Factor subfield, a PE Disambiguity subfield, an UL Spatial Reuse subfield, a third Reserved subfield, a HE/EHT P160 subfield, a Special User Info Field Flag subfield, an EHT Reserved subfield, a fourth Reserved subfield, and a Trigger Dependent Common Info subfield. The Trigger Type subfield, UL Length subfield, More TF subfield, CS required subfield, UL BW subfield, GI and HE-LTF Type/Triggered TXS Mode subfield, first Reserved subfield, Number of HE/EHT-LTF Symbols subfield, second Reserved subfield, LDPC Extra Symbol Segment subfield, AP Tx Power subfield, Pre-FEC Padding Factor subfield, PE Disambiguity subfield, UL Spatial Reuse subfield, third Reserved subfield, HE/EHT P160 subfield, Special User Info Field Flag subfield, EHT Reserved subfield, fourth Reserved subfield, and Trigger Dependent Common Info subfield may have the same content and interpretation as corresponding subfields of an EHT variant Common Info field defined in the IEEE 802.11be draft amendment ("IEEE P802.11be/D3.1, March 2023").

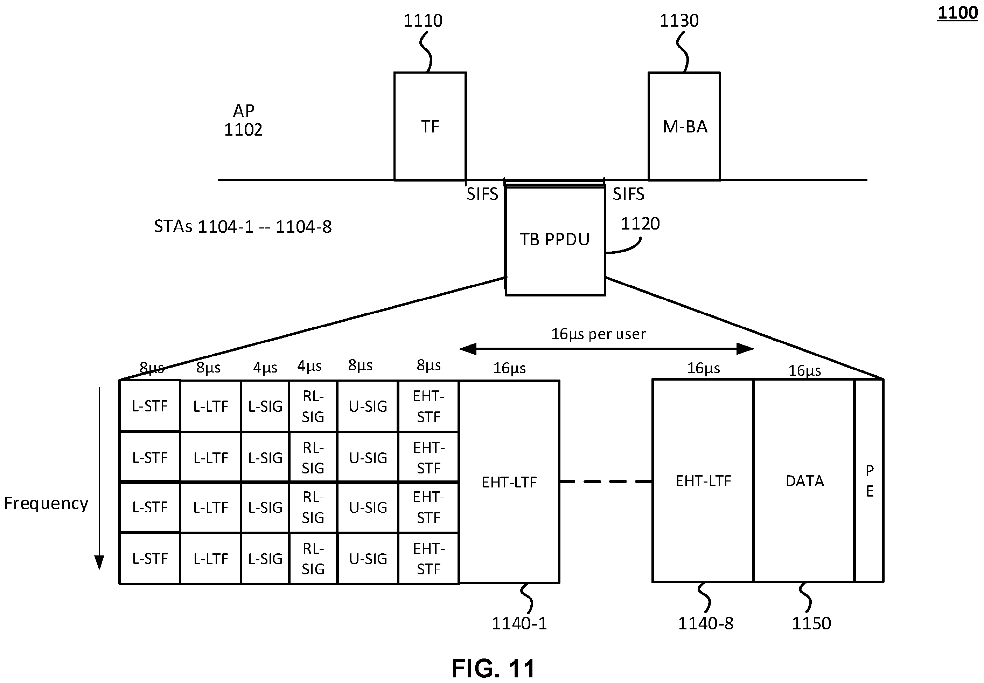

FIG. 11 shows an example application of TB PPDU. As shown in FIG. 11, the example 1100 may include an AP (e.g., AP 1102) and a plurality of STAs (e.g., STAs 1104-1 to 1104-8). An AP 1102 may send (e.g., transmit) trigger frames (TF) 1110 to STAs 1104 (e.g., 1104-1 to 1104-8) to solicit uplink (UL) frames from STAs 1104 (e.g., 1104-1 to 1104-8).

STAs 1104 (e.g., 1104-1 to 1104-8) may respond (e.g., simultaneously) to TF 1110 by (e.g., each) sending (e.g., transmitting) a TB PPDU 1120. TB PPDU 1120 may have an 80 (or any other value) MHz bandwidth. A STA 1104 may duplicate the fields L-STF, L-LTF, L-SIG, RL-SIG, U-SIG, and EHT-STF to fill the bandwidth of the TB PPDU 1120. For example, as shown in FIG. 11, a STA 1104 may duplicate four times over frequency each of the fields L-STF, L-LTF, L-SIG, RL-SIG, U-SIG, and EHT-STF to fill out the 80 MHz bandwidth. EHT-L TFs 1140 and a data field 1150 of the TB PPDU 1120 may fill out the entire 80 MHz bandwidth and are not duplicated over frequency. The number/quantity of EHT-LTFs sent (e.g., transmitted) by the STA (in time, or in the time domain) may be based on the maximum number/quantity of spatial streams across all RUs contained in the TB PPDU 1120. In the example 1100, TB PPDU 1120 may include eight EHT-LTFs 1140-1 to 1140-8. AP 1102 may acknowledge TB PPDU 1120 by sending (e.g., transmitting) a multi-user block acknowledgment frame M-BA 1130.

TB PPDUs 1120 sent (e.g., transmitted) by STAs 1104 (e.g., 1104-1 to 1104-8) may be sent (e.g., transmitted) simultaneously, for example, based on (e.g., in response to) TF 1110. Precorrection of time, frequency, sampling clock, and power (e.g., for a High Efficiency (HE) TB PPDU or extremely high throughput (EHT) TB PPDU) by STAs 1104 (e.g., 1104-1 to 1104-8) may be used to mitigate synchronization and interference issues at AP 1102. Specifically, frequency and sampling clock precorrections may be used to prevent inter-carrier interference. Power precorrection may be used to control interference between TB PPDUs 1120.

TF 1110 may include (e.g., in a User Info field) an uplink (UL) Target Receive Power subfield that may indicate whether a STA among STAs 1104 (e.g., 1104-1 to 1104-8) is to send (e.g., transmit) TB PPDU 1120 at a maximum transmit power. The maximum transmit power may correspond to the STA's maximum transmit power for the assigned High Efficiency Modulation and Coding Scheme (HE-MCS). The STA may send (e.g., transmit) TB PPDU 1120 at the maximum transmit power, for example, if/when the UL Target Receive Power subfield indicates that the maximum transmit power is to be used. Otherwise, the STA may determine (e.g., calculate) the transmit power (e.g., $Tx_{pwr}^{STA}$) of TB PPDU 1120 for the assigned HE-MCS, for example, using the equation:

$$Tx_{pwr}^{STA} = PL_{DL} + TargetRx_{pwr}$$

where $PL_{DL}$ is the downlink pathloss and $TargetRx_{pwr}$ is the expected receive signal power, in units of dBm, as indicated by the UL Target Receive Power subfield in the User Info field of TF 1110. The STA may take into account the beamforming gain when calculating the transmit power, for example, if the STA applies/uses beamforming to/for TB PPDU 1120.

The STA may determine (e.g., compute) $PL_{DL}$ using the equation:

$$PL_{DL} = Tx_{pwr}^{AP} - Rx_{pwr}$$

where $Tx_{pwr}^{AP}$ is the AP's transmit power, in units of dBm/20 MHz, as indicated by an AP Tx Power subfield of a Common Info field of TF 1110, and $Rx_{pwr}$ is the receive signal power, in units of dBm/20MHz, of TF 1110 at an antenna connector of the STA. $Rx_{pwr}$ may be an average of the receive signal power over the antennas on which the average $PL_{DL}$ is being determined (e.g., computed).

An AP and an associated STA tuned to the same carrier frequency may have errors in their generated carrier frequencies in reference to the ideal carrier frequency, for example, due to the finite accuracy of clock generating circuits of an AP and a STA. When/if an AP receives a TB PPDU as in the example 1100, the AP may observe a baseband signal whose center frequency has an offset (i.e. carrier frequency offset or CFO) from the DC subcarrier. Similarly, an AP receiving the symbols of a TB PPDU sampled using its own clock may observe that the TB PPDU signal is generated at a clock offset (i.e. symbol clock offset or SCO) from its own sampling clock. Both SCO and CFO may result in receive errors when/if not properly mitigated. A STA may compensate for carrier frequency offset (CFO) error and/or symbol clock offset (SCO) error with respect to TF 1110, for example, to limit the effects of CFO and SCO. A STA may compensate for CFO error and/or SCO error with respect to TF 1110, for example, when/if TB PPDU 1120 is a TB PPDU or a non-HT or non-HT duplicate PPDU with the TXVECTOR parameter TRIGGER_RESPONDING set to true.

After compensation, the absolute value of residual CFO error with respect to TF 1110 shall not exceed the following levels, for example, when/if measured at the 10% point of a complementary cumulative distribution function (CCDF) of CFO errors in Additive White Gaussian Noise (AWGN) at a received power of -60 dBm in the primary 20 MHz channel:

350 Hz for the data subcarriers of a TB PPDU; 2 kHz for a non-HT PPDU or non-HT duplicate PPDU. The residual CFO error measurement on an HE TB PPDU shall be made after the HE-SIG-A field. The residual CFO error measurement on an EHT TB PPDU shall be made after the U-SIG field. The residual CFO error measurement on a non-HT or non-HT duplicate PPDU shall be made after the L-STF field. The symbol clock error shall be compensated by the same ppm amount as the CFO error.

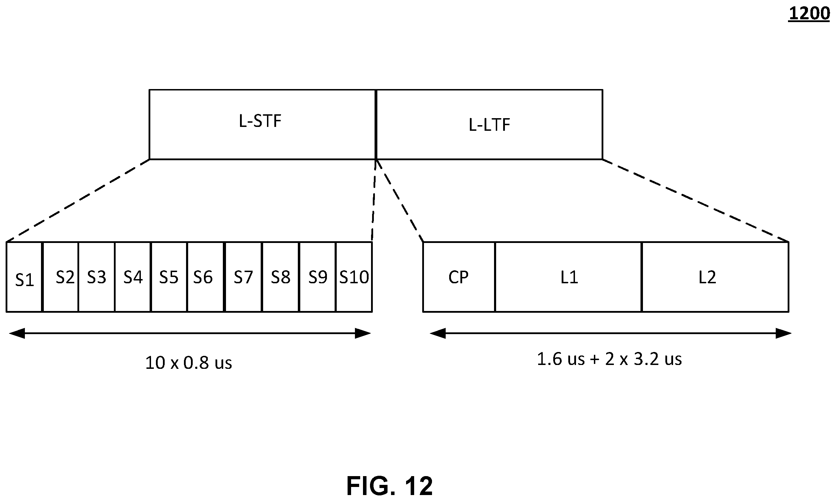

FIG. 12 shows an example L-STF and an example L-LTF. The L-STF and the L-LTF may be part of a non-HT (e.g., legacy) preamble of a non-HT PPDU (e.g., as shown by non-HT PPDU 310). As shown in FIGs. 3-5, the non-HT (e.g., legacy) preamble may be prepended to an HT mixed mode PPDU, a VHT PPDU, HE PPDUs, and EHT PPDUs. As shown in FIG. 12, the L-STF and the L-LTF each may have a duration of 8 microseconds. The L-STF may include ten OFDM symbols called Short Training Symbols (STS). The L-STF may be formed by the repetition of ten short symbols, S1 to S10, of 16 samples each. The L-STF may be used by a receiver for packet detection, automatic gain control (AGC), and coarse acquisition and frequency synchronization. The L-LTF may include a cyclic prefix (CP) of 1.6 microseconds and two identical symbols L1 and L2 of 3.2 microseconds each. The CP of the L-LTF may be twice as long as the CP of other symbols. The L-LTF may be used by a receiver for channel estimation and fine frequency offset correction.

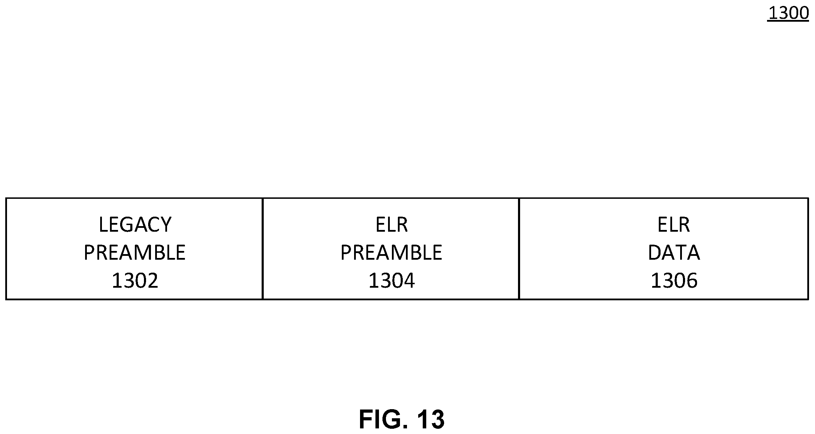

FIG. 13 shows an example extended/enhanced long range (ELR) PPDU 1300. ELR PPDU 1300 may allow a STA to increase its transmission range. For example, a common problem in at least some Wi-Fi communications may be the asymmetry between the downlink transmission range of an AP and the uplink transmission range of a STA associated with the AP. The asymmetry may result in the STA (e.g., successfully) receiving PPDUs from the AP and being unable to communicate with the AP, for example, when/if the STA is an edge STA (e.g., located at the edge of the AP's transmission range). ELR PPDU 1300 may reduce this downlink/uplink transmission range asymmetry, for example, by enabling the STA to increase its uplink transmission range to successfully reach the AP.

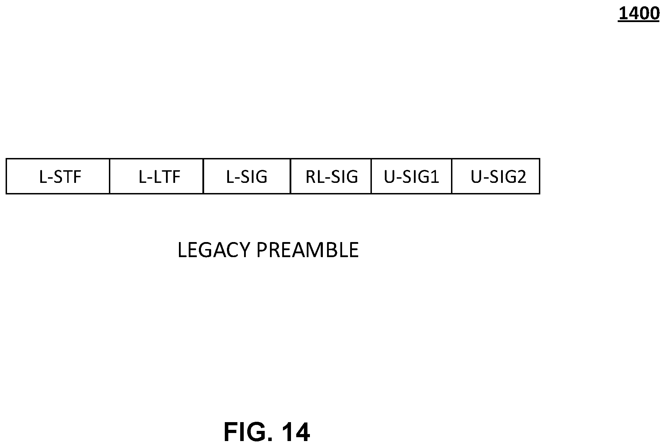

ELR PPDU 1300 may include a legacy preamble 1302, an ELR preamble 1304, and an ELR data portion 1306, for example, as shown in FIG. 13. Legacy preamble 1302 may enable backward compatibility of ELR PPDU 1300. For example, legacy preamble 1302 may allow legacy IEEE 802.11 to detect ELR PPDU 1300. Legacy preamble 1302 may comprise various formats. Legacy preamble 1302 may include an L-STF, an L-LTF, and an L-SIG, for example, according to a first option. Legacy preamble 1302 may include an RL-SIG after the L-SIG, for example, according to a second option. The presence of the RL-SIG in legacy preamble 1302 may increase the range of ELR PPDU 1300 when/if received by a legacy 802.11 STA. Legacy preamble 1302 may further include one or more U-SIG fields, after the L-SIG and the RL-SIG, for example, in a third option. For example, legacy preamble 1302 may be as shown by legacy preamble 1400 in FIG. 14 as will be described herein.

ELR preamble 1304 may include an ELR-STF, an ELR-LTF, and an ELR-SIG. Similar to the L-STF, an ELR-STF may be used by a receiver (e.g. an AP) of an ELR PPDU 1300 to synchronize with the carrier frequency and frame timing of the transmitter of the ELR PPDU 1300 (e.g. an edge STA) and to adjust the receiver signal gain. The ELR-LTF may be used by the receiver (e.g. an AP) of an ELR PPDU 1300 to estimate channel coefficients, for example, to equalize the channel response (e.g., amplitude and phase distortion) in both the ELR-SIG and the ELR Data portion 1306 of ELR PPDU 1300.

The ELR-STF may be a longer version of L-STF to support longer range synchronization compared to L-STF. Similarly, ELR-LTF may be a longer version of L-LTF to support higher robustness when/if estimating the channel coefficients from the edge STA to the AP. The ELR-LTF may also include a higher number/quantity of symbol repetitions compared to the L-STF (i.e. 2). The ELR Preamble may be designed with high degree of flexibility without sacrificing backward compatibility, for example, due to Legacy Preamble 1302.

FIG. 14 shows an example of legacy preamble. A legacy preamble may comprise an L-STF, an L-LTF, an L-SIG, an RL-SIG, and one or more U-SIG fields, as described herein. The one or more U-SIG fields may provide U-SIG information that may be used by a STA receiving ELR PPDU 1300. For example, the one or more U-SIG fields may indicate a transmission opportunity (TXOP) duration associated with ELR PPDU 1300, a BSS Color associated with the STA sending (e.g., transmitting) ELR PPDU 1300, a bandwidth associated with ELR PPDU 1300, an UL/DL indication, and a PHY version of ELR PPDU 1300.

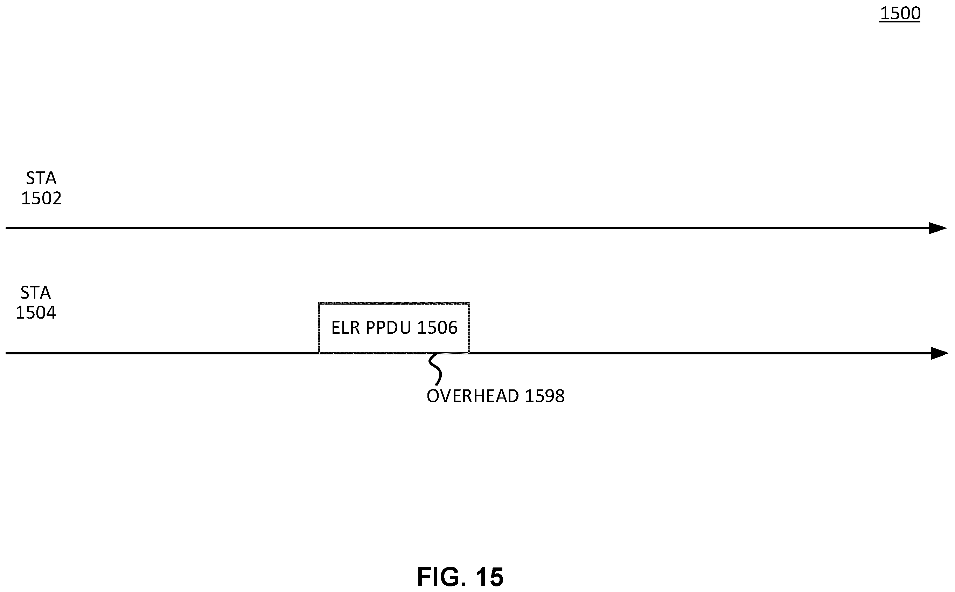

FIG. 15 shows an example application of ELR PPDU. More specifically, FIG. 15 shows an example 1500 that highlights a potential problem that may arise using the example ELR PPDU 1300 as described herein. The example 1500 may include a STA 1502 and a STA 1504, for example, as shown in FIG. 15. STA 1502 may be an AP STA, and STA 1504 may be a non-AP STA, or vice versa. Alternatively, STAs 1502 and 1504 may be both AP STAs or non-AP STAs.

STA 1504 may send (e.g., transmit) an ELR PPDU 1506 to STA 1502. ELR PPDU 1506 may be a frame (e.g., a control frame, a management frame, a data frame). For example. ELR PPDU 1506 may be the ELR PPDU 1300 as described with respect to FIG. 13. An ELR PPDU 1506 may comprise a legacy preamble (e.g., legacy preamble 1302), an ELR preamble (e.g., ELR preamble 1304), and an ELR data portion (e.g., ELR data portion 1306). The legacy preamble of ELR PPDU 1506 may enable backward compatibility of ELR PPDU 1506. For example, the legacy preamble of ELR PPDU 1506 may allow legacy IEEE 802.11 devices to detect ELR PPDU 1506.

The ELR preamble of ELR PPDU 1506 may comprise an ELR-STF, an ELR-LTF, and an ELR-SIG. The ELT-LTF of the ELR preamble may be used by STA 1502 to determine/estimate channel coefficients, for example, to equalize the channel response (e.g., amplitude and phase distortion) in both the ELR preamble and the ELR data portion included in ELR PPDU 1506. The STA 1502 may be configured to receive ELR PPDU 1506.

The ELR-LTF of the ELR preamble of ELR PPDU 1506 may be a longer version of the L-LTF to support higher robustness, for example, when/if estimating the channel coefficients from an edge STA (e.g., STA 1504) to an AP (e.g., STA 1502). The ELR-LTF may include a higher number/quantity of symbol repetitions compared to the L-LTF of the legacy preamble of ELR PPDU 1506 (e.g., two symbol repetitions). The longer version of L-LTF included with the ELR preamble of ELR PPDU 1506 may increase the size of ELR PPDU 1506 and may cause unnecessary overhead 1598 associated with the transmission of ELR PPDU 1506.

Examples described herein may provide improvements for channel estimation and/or may reduce overhead associated with data transmission (e.g., transmission of an ELR PPDU). As described herein, an ELR PPDU may reuse portions of a preamble (such as a legacy preamble). The reuse of portions of the legacy preamble as portions of the ELR preamble may provide advantages such as reducing (e.g., significantly reducing) the size of a data unit (e.g., reducing a size of an ELR PPDU). Such an ELR PPDU may be referred to as a compressed ELR PPDU (or any other type of data unit).

One or more portions of another preamble (e.g., a legacy preamble) may be used (e.g., reused) as one or more portions of an ELR preamble. For example, one or more of the L-LTF, L-SIG, RL-SIG, and U-SIG of the legacy preamble may be reused as an ELR-LTF of the ELR preamble. A STA may send (e.g., transmit) to an AP, a PPDU comprising a predetermined signal field, for example, to enable this reuse. The STA may send (e.g., transmit) to the AP, the PPDU comprising the predetermined signal field, for example, based on a transmission mode used to send (e.g., transmit) the PPDU. Sending (e.g., transmitting) the PPDU may comprise sending (e.g., transmitting) the PPDU via a channel from the STA to the AP. The channel may be estimated by the AP, for example, based on the existing L-LTF (as may be implemented by a person skilled in the art) and based on the predetermined signal field. The transmission mode may be a long range (ELR) operation mode for transmission of the PPDU from the STA to the AP. The operation mode may comprise usage by the STA of an ELR PPDU format for the PPDU. The predetermined signal field may comprise the U-SIG field of a legacy preamble included with the ELR PPDU format of the PPDU. The predetermined signal field may comprise a non-high throughput (non-HT) signal field (L-SIG) of a legacy preamble included with the ELR PPDU format of the PPDU. A value of the predetermined signal field may be provided to the STA by the AP, for example, prior to/before the transmission of the PPDU.

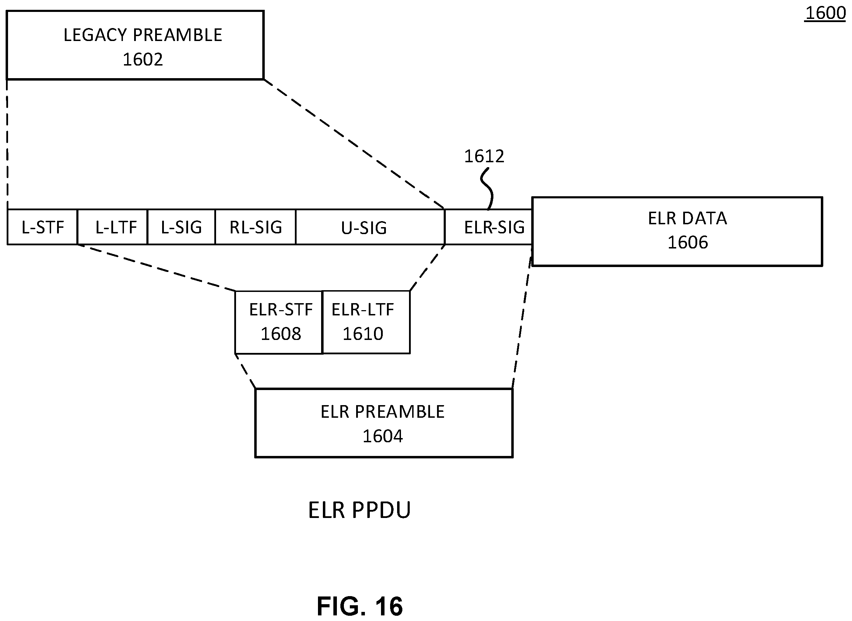

FIG. 16 shows an example ELR PPDU 1600. As shown in FIG. 16, an example ELR PPDU 1600 may include a legacy preamble 1602, an ELR preamble 1604, and an ELR data portion 1606. Legacy preamble 1602 may include an L-STF, an L-LTF, an L-SIG, an RL-SIG, and a U-SIG. The L-STF, L-LTF, and L-SIG are described in FIG. 3 herein. The RL-SIG is described in FIG. 4 herein. The U-SIG may comprise one or more U-SIG symbols. For example, the U-SIG may comprise two U-SIG symbols or four U-SIG symbols as described in FIG. 6 herein.

Legacy preamble 1602 may be similar to legacy preamble 1302, and an ELR data portion 1606 may be similar to ELR data portion 1306. Legacy preamble 1602 of ELR PPDU 1600 may enable backward compatibility of ELR PPDU 1600 as an ELR PPDU. For example, the legacy preamble included with ELR PPDU 1600 as an ELR PPDU may allow legacy IEEE 802.11 devices to detect ELR PPDU 1600.

ELR preamble 1604 may include an ELR-STF 1608, an ELR-LTF 1610, and an ELR-SIG 1612. As shown in FIG. 16, ELR-STF 1608 and ELR-LTF 1610 may reuse the L-LTF, L-SIG, RL-SIG, and U-SIG of legacy preamble 1602. For example, the L-LTF and U-SIG of legacy preamble 1602 may provide ELR-LTF 1610. A receiver of ELR PPDU 1600 may interpret the L-LTF and U-SIG of legacy preamble 1602 as both L-LTF and as an ELR-LTF. For example, the receiver of ELR PPDU 1600 may use the L-LTF and U-SIG to perform channel estimation in both the L-SIG and the ELR data portion 1606 of ELR PPDU 1600. The AP may perform averaging of the channel estimates obtained from the L-LTF and the U-SIG. The AP may use the channel estimate obtained from the U-SIG and may discard the channel estimate from the L-LTF. The channel estimate from the L-LTF may not be reliable, for example, if the AP uses the L-LTF for gain or frequency synchronization.

One or more of the L-LTF, L-SIG, RL-SIG, and U-SIG of legacy preamble 1602 may provide ELR-LTF 1610. ELR-SIG 1612 may include indications per STA of resource unit (RU) allocations.

ELR PPDU 1600 may include an HE-SIG-A (e.g. similar to HE PPDU 410, 420, and 430 shown in FIG. 4), for example, instead of the U-SIG. HE-SIG-A is not shown in FIG. 16. The L-LTF and the HE-SIG-A may provide ELR-LTF 1610. A receiver of ELR PPDU 1600 may interpret the L-LTF and HE-SIG-A of legacy preamble 1602 as both an L-LTF and an ELR-LTF. For example, the receiver of ELR PPDU 1600 may use the L-LTF and HE-SIG-A to perform channel estimation in both the L-SIG and ELR data portion 1606 of ELR PPDU 1600. The receiver of ELR PPDU 1600 may perform averaging of channel estimates obtained from the L-LTF and the HE-SIG-A. The receiver of ELR PPDU 1600 may use a channel estimate obtained from the HE-SIG-A and may discard a channel estimate obtained from the L-LTF. The channel estimate from the L-LTF may not be reliable, for example, if the receiver of ELR PPDU 1600 uses the L-LTF for gain or frequency synchronization. For brevity, unless otherwise mentioned, this disclosure hereinafter may use examples in which the ELR PPDU includes a U-SIG. As would be understood by a person of skill in the art based on the teachings herein, the disclosure is not limited to these examples and can be readily extended to examples in which the ELR PPDU may include an HE-SIG-A instead of the U-SIG or in which the U-SIG may include multiple OFDM symbols (e.g., as described with respect to FIG. 6).

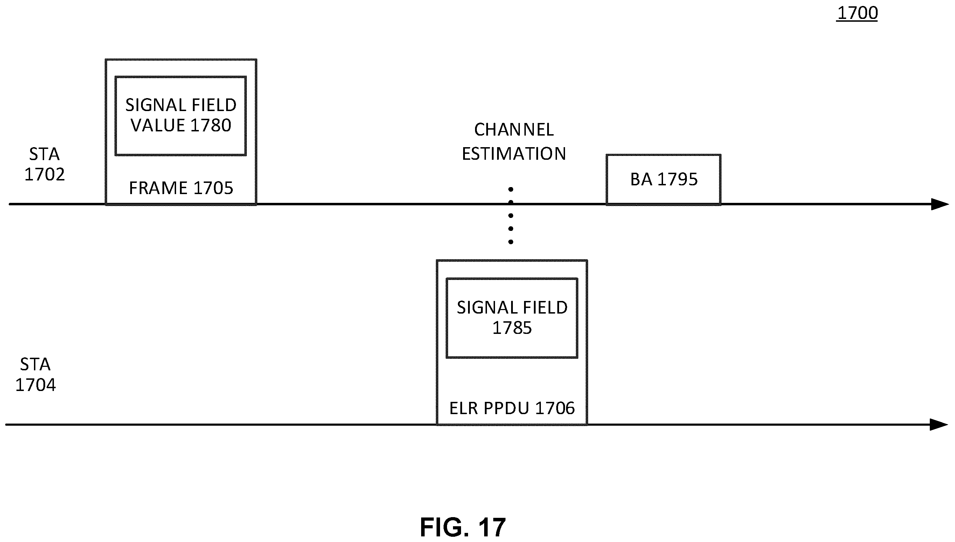

FIG. 17 shows an example application of an ELR PPDU. As shown in FIG. 17, example 1700 may include a STA 1702 and a STA 1704. STA 1702 may be an AP STA, and STA 1704 may be a non-AP STA, or vice versa. STAs 1702 and 1704 may be both AP STAs or non-AP STAs.

STA 1702 may determine a mode for STA 1704 to use for sending (e.g., transmitting) a PPDU to STA 1702. For example, STA 1702 may determine that STA 1704 is to use a first mode to send (e.g., transmit) an ELR PPDU 1706 to STA 1702. The first mode may comprise an ELR operation mode. STA 1704 using the first mode may use a first format for ELR PPDU 1706. The first format may be an ELR PPDU format such as that of ELR PPDU 1500. For example, the ELR PPDU format may include a legacy preamble and an ELR preamble, and may reuse one or more of the L-LTF, L-SIG, RL-SIG, and U-SIG of the legacy preamble as an ELR-LTF of the ELR preamble.

STA 1702 may send (e.g., transmit), to STA 1704, a frame 1705 with a signal field value 1780. Frame 1705 may comprise a beacon frame and/or an action frame. Signal field value 1780 may include one or more predetermined values for one or more of the L-SIG, RL-SIG, and U-SIG of the legacy preamble of ELR PPDU 1706, for example, to enable the reuse of the legacy preamble in ELR PPDU 1706. As mentioned herein, the U-SIG of ELR PPDU 1706 may be replaced with an HE-SIG-A or may comprise multiple of OFDM symbols (e.g., U-SIG-1, U-SIG-2 or U-SIG-1, U-SIG-1, U-SIG-2, U-SIG-2). Signal field value 1780 may include a predetermined value for the HE-SIG-A of ELR PPDU 1706 or multiple predetermined values for the multiple OFDM symbols of the U-SIG of ELR PPDU 1706.

Example predetermined values that may be included in signal field value 1780 may include (and not limited to): two copies of the U-SIG, four copies of the U-SIG, a combination of the L-SIG and the RL-SIG, a combination of the L-SIG, the RL-SIG, and two copies of the U-SIG, and a combination of the L-SIG, the RL-SIG, and four copies of the U-SIG.

ELR PPDU 1706 may be the PPDU that STA 1704 may send (e.g., transmit) to STA 1702, for example, after receiving frame 1705. For example, when/if STA 1702 is an AP STA, frame 1705 may be a beacon frame or an action frame that indicates to STA 1704 to use the first mode to send (e.g., transmit) the next PPDU to STA 1702. Frame 1705 may be a triggering frame for ELR PPDU 1706. STA 1704 may send (e.g., transmit) ELR PPDU 1706, for example, based on (e.g., in response to) frame 1705. For example, STA 1704 may send (e.g., transmit) ELR PPDU 1706 a SIFS (e.g., as shown in FIG. 11) after (e.g., upon) receiving frame 1705.

STA 1704 may prepare ELR PPDU 1706, for example, based on frame 1705. STA 1704 may prepare ELR PPDU 1706 based on frame 1705, for example, based on (e.g., on, upon) receiving frame 1705 including signal field value 1780. STA 1704 may generate/construct a signal field 1785 of ELR PPDU 1706, for example, using signal field value 1780. For example, STA 1704 may use signal field value 1780 as the value of signal field 1785. As described herein, signal field 1785 may include one or more of the L-SIG, RL-SIG, and U-SIG of the legacy preamble of ELR PPDU 1706.

STA 1702 may use signal field value 1780 and signal field 1785 to determine (e.g., estimate) the channel from STA 1704 to STA 1702, for example, after receiving ELR PPDU 1706. For example, STA 1702 may use signal field 1785 as an ELR-LTF of ELR PPDU 1706 and may compare a value of signal field 1785 to the signal field value 1780 to determine an estimate of the channel.

Such approach (e.g., way to estimate the channel) may generate improved diversity and/or power. For example, if/where the signal field value corresponds to a value of a U-SIG field, if/when combined with the L-LTF of the legacy preamble, this approach may result in a 2x diversity or 3 dB improvement compared to non ELR PPDU. For example, the signal field value may include 4 OFDM symbols for the U-SIG field, and this approach, if/when combined with the L-LTF, may result in a 3x diversity or 4.7 dB improvement compared to non ELR PPDU. For example, if/where the signal field value includes the L-SIG and the RL-SIG, if/when combined with the L-LTF, and the 4x U-SIG of the previous example, this approach may result in a 4x diversity or 6 dB improvement compared to non ELR PPDU.

STA 1702 may acknowledge ELR PPDU 1706. STA 1702 may acknowledge ELR PPDU 1706, for example, by sending (e.g., transmitting) a block acknowledgment frame (BA) 1795.

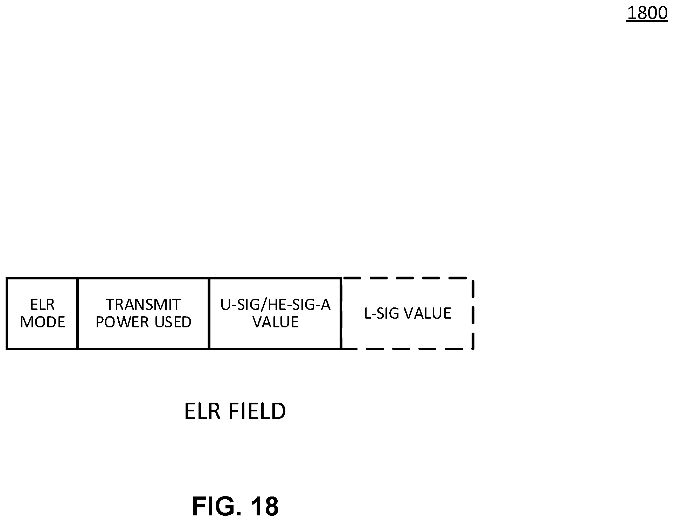

FIG. 18 shows an example ELR field. FIG. 18 shows an example ELR field 1800 that may be used. For example, ELR field 1800 may comprise a signal field value (e.g., signal field value 1780 as described herein with respect to FIG. 17) in a first frame (e.g., frame 1705 as described herein with respect to FIG. 17). The first frame carrying ELR field 1800 may be a beacon frame or an action frame.

As shown in FIG. 18, the example ELR field 1800 may include an ELR mode field, a Transmit Power Used field, a U-SIG/HE-SIG-A value field, and an L-SIG value field. The ELR mode field may indicate whether a receiver of the first frame is to use a first mode to send (e.g., transmit) a PPDU to a transmitter of the first frame. The Transmit Power Used field may indicate a transmit power used by the transmitter of the first frame to send (e.g., transmit) the first frame. The Transmit Power Used field may be set by the transmitter of the first frame as described in FIG. 8 herein with respect to the Transmit Power Used field of Link Measurement Request frame 800. The U-SIG/HE-SIG-A value field, and the L-SIG value field may be an example combination of signal field values (e.g., signal value 1780) carried in the first frame (e.g., frame 1705).

An example ELR field may include the U-SIG value field and not include the L-SIG value field. Another example ELR field may include the L-SIG and the RL-SIG fields. The ELR field may be carried in a first frame (e.g., frame 1705 as described herein). One or more elements of an example ELR field may be provided (e.g., implicitly) by the AP in a beacon frame, association response frame, probe response frame and/or an action frame.

Predetermined values of the BSS color field of the U-SIG or HE-SIG-A may be obtained, for example, from the HE operation element broadcasted by the AP in a beacon. Predetermined values of the BSS color field of the U-SIG or HE-SIG-A may be obtained, for example, from information elements in unicast frames received from the AP (e.g. association response frames or probe response frames). One or more elements of an example ELR field may be set to a constant value that is known by the AP or STA that supports the transmission and/or reception of ELR PPDU. For example, the PHY Version Identifier field of the U-SIG may be set to 1. Bandwidth may be set to 0 (e.g., indicating 20 MHz). UL/DL may be set to 1 (e.g., UL). TXOP may be set to 127 (e.g., absence of duration information). The Length and Rate fields of the L-SIG may be indicated by the AP as a PPDU duration value for the ELR PPDU, for example, if the L-SIG and RL-SIG may be predetermined. For example, if the PPDU duration is equal to a parameter TXTIME, the Rate field may be set to a value representing 6 Mbps and Length field may be set to a value equal to Length = ceil((TXTIME-SignalExtension-20)/4)x3 -3, where Signal Extension is equal to a period of signal extension that may apply to the ELR PPDU.

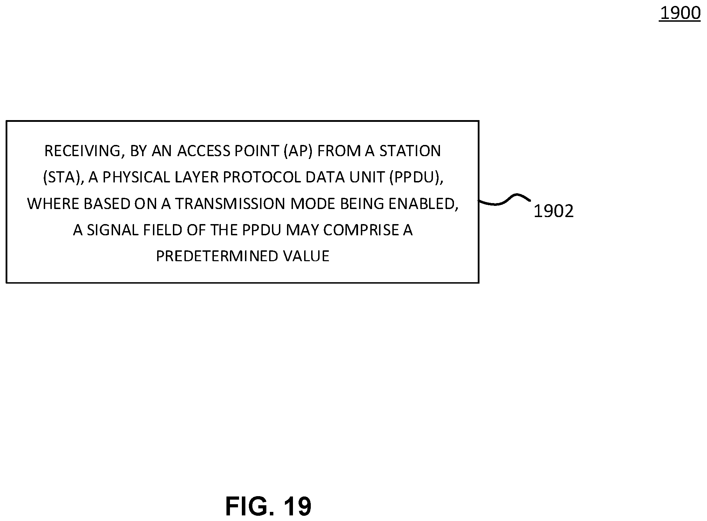

FIG. 19 shows an example of receiving a PPDU. Example process 1900 may be performed by a first STA (e.g., STA 1702 or STA 1704 in FIG. 17). The first STA may be an AP STA or a non-AP STA. As shown in FIG. 19, process 1900 may include step 1902.

Step 1902 may comprise receiving, by an access point (AP) from a station (STA), a physical layer protocol data unit (PPDU), where based on a transmission mode being enabled, a signal field of the PPDU may comprise a predetermined value. Receiving the PPDU may comprise receiving the PPDU via a channel from the STA to the AP. Process 1900 may further comprise determining (e.g., estimating), by the AP, the channel, for example, based on the predetermined value. The determining (e.g., estimating) the channel may be, for example, based on a long training field of the PPDU. Process 1900 may further comprise sending (e.g., transmitting), by the AP to the STA, a first frame. The first frame may comprise a beacon frame. The first frame may comprise an action frame.

The transmission mode may comprise an extended long range (ELR) operation mode. The first frame may comprise an indication to the STA of the ELR operation mode for transmission of the PPDU from the STA to the AP. The first frame may comprise an ELR field. The ELR field may comprise the indication of the ELR operation mode. The ELR operation mode may comprise usage by the STA of an ELR PPDU format for the PPDU. The PPDU may be received from the STA (e.g., in step 1902), for example, based on the first frame indicating the ELR operation mode. The first frame may indicate a transmit power used to send (e.g., transmit) the first frame. The first frame may comprise a transmit power field. The transmit power field may indicate the transmit power.

A PPDU format of the PPDU may comprise an extended long range (ELR) ultra-high reliability (UHR) PPDU format. The signal field may comprise one or more of: a non-high throughput (non-HT) short training field (L-STF), a non-HT long training field (L-LTF), a non-HT signal (L-SIG) field, a repeated L-SIG (RL-SIG) field, or a universal signal (U-SIG) field. The U-SIG field may comprise a plurality of orthogonal frequency division multiplexing (OFDM) symbols. The plurality of OFDM symbols may comprise 4 OFDM symbols. The signal field may comprise a non-high throughput (non-HT) signal field (L-SIG). A length/duration of the PPDU may be pre-determined, for example, based on the signal field comprising the L-SIG.

Process 1900 may further comprise sending (e.g., transmitting), by the AP to the STA, a second frame indicating a value of the signal field. The first frame may comprise the second frame. The sending (e.g., transmitting) of the PPDU may comprise sending (e.g., transmitting) the PPDU with a predetermined value, for example, based on receiving the second frame. The predetermined value may comprise the value. The value may comprise a reserved field. The value may comprise a PHY version independent field. The value may comprise a PHY version dependent field.

A PPDU format of the PPDU may comprise a high efficiency (HE) PPDU format. The signal field may comprise an HE-SIG-A field. The HE-SIG-A field may comprise 4 OFDM symbols. The signal field may comprise the L-SIG. A physical layer (PHY) header of the PPDU may comprise the predetermined value. The PPDU may comprise an ELR PPDU. The PHY header may comprise a legacy header of the ELR PPDU. The transmission mode may be based on a received signal strength indicator (RSSI) value of a frame received by the STA from the AP. The predetermined value may comprise values for one or more of: a universal signal field (U-SIG), a non-HT signal (L-SIG) field, or a repeated L-SIG (RL-SIG) field. The values may comprise multiple values for the U-SIG field.

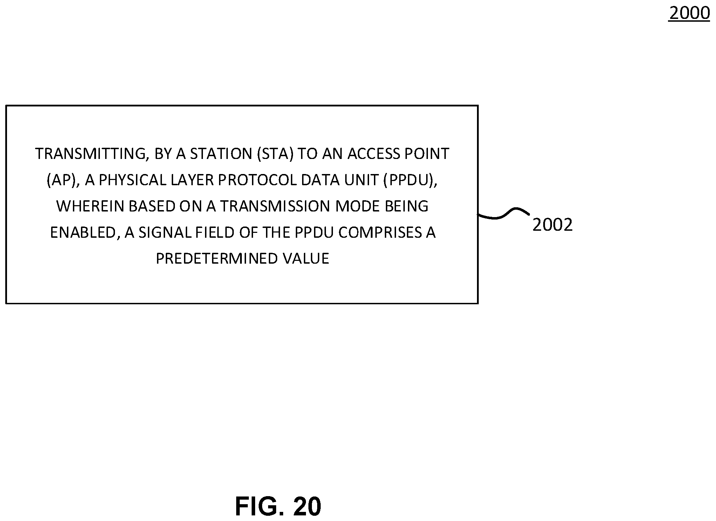

FIG. 20 shows an example of sending a PPDU. Example process 2000 may be performed by a first STA (e.g., STA 1702 or STA 1704 in FIG. 17). The first STA may be an AP STA or a non-AP STA. As shown in FIG. 20, process 2000 may include steps 2002.

Step 2002 may include sending (e.g., transmitting), by a station (STA) to an access point (AP), a physical layer protocol data unit (PPDU), where based on a transmission mode being enabled, a signal field of the PPDU may comprise a predetermined value. Sending (e.g., transmitting) the PPDU may comprise sending (e.g., transmitting) the PPDU via a channel from the STA to the AP. Process 2000 may further comprise enabling the transmission mode, for example, based on an RSSI being greater than a first threshold. The first threshold may comprise -82 dBm. Process 2000 may further comprise enabling the transmission mode, for example, based on a path loss of the channel from the AP to the STA.

Process 2000 may further comprise receiving, by the STA from the AP, a first frame. The path loss may comprise a transmit power subtracted from a received signal strength indication (RSSI) of the first frame. The transmission mode may be enabled, for example, based on the path loss being above a second threshold. The channel may be determined (e.g., estimated) by the AP, for example, based on the predetermined value. Process 2000 may further comprise receiving, by the STA from the AP, a first frame.

The channel may be determined (e.g., estimated) by the AP, for example, based on the predetermined value. The estimating of the channel may be further based on a long training field of the PPDU. Process 2000 may further comprise receiving, by the STA from the AP, a first frame. The first frame may comprise a beacon frame. The first frame may comprise an action frame.

The transmission mode may comprise an extended long range (ELR) operation mode. The first frame may comprise an indication to the STA of the ELR operation mode for transmission of the PPDU from the STA to the AP. The first frame may comprise an ELR field. The ELR field may comprise the indication of the ELR operation mode. The ELR operation mode may comprise usage by the STA of an ELR PPDU format for the PPDU.

The sending (e.g., transmitting) of the PPDU in step 2002 may comprise sending (e.g., transmitting) the PPDU, for example, based on the first frame indicating the ELR operation mode. The first frame may indicate a transmit power used to send (e.g., transmit) the first frame. The first frame may comprise a transmit power field. The transmit power field may indicate the transmit power.

A PPDU format of the PPDU may comprise an extended long range (ELR) ultra-high reliability (UHR) PPDU format. The signal field may comprise one or more of: a non-high throughput (non-HT) short training field (L-STF), a non-HT long training field (L-LTF), a non-HT signal (L-SIG) field, a repeated L-SIG (RL-SIG) field, or a universal signal (U-SIG) field. The U-SIG field may comprise a plurality of orthogonal frequency division multiplexing (OFDM) symbols. The plurality of OFDM symbols may comprise 4 OFDM symbols. The signal field may comprise a non-high throughput (non-HT) signal field (L-SIG). A length/duration of the PPDU may be pre-determined, for example, based on the signal field comprising the L-SIG.

Process 2000 may further comprise receiving, by the STA from the AP, a second frame indicating a value of the signal field. The first frame may comprise the second frame. The sending (e.g., transmitting) of the PPDU may comprise sending (e.g., transmitting) the PPDU with the predetermined value, for example, based on receiving the second frame. The predetermined value may comprise the value. The value may comprise a reserved field. The value may comprise a PHY version independent field. The value may comprise a PHY version dependent field.

A PPDU format of the PPDU may comprise a high efficiency (HE) PPDU format. The signal field may comprise an HE-SIG-A field. The HE-SIG-A field may comprise 4 OFDM symbols. The signal field may comprise the L-SIG. A physical layer (PHY) header of the PPDU may comprise the predetermined value. The PPDU may comprise an ELR PPDU. The PHY header may comprise a legacy header of the ELR PPDU. The transmission mode may be based on a received signal strength indicator (RSSI) value of a frame received by the STA from the AP. The predetermined value may comprise values for one or more of: a universal signal field (U-SIG), a non-HT signal (L-SIG) field, or a repeated L-SIG (RL-SIG) field. The values may comprise multiple values for the U-SIG field.

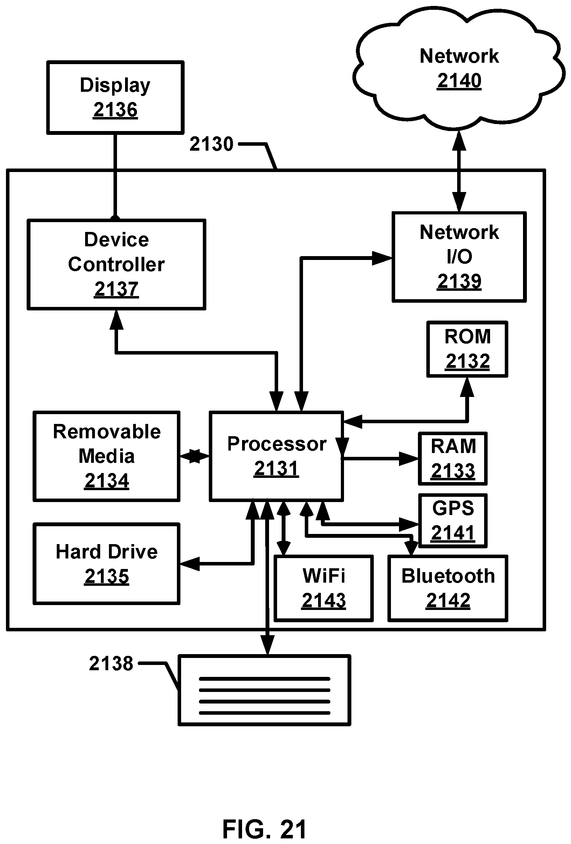

FIG. 21 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 1104, 1504, 1704), an AP (e.g., 104-1, 104-2, 1102, 1502, 1702), communication devices (e.g., 210, 260), and/or any computing and/or communication device described herein. The computing device 2130 may comprise one or more processors 2131, which may execute instructions stored in the random-access memory (RAM) 2133, the removable media 2134 (such as a Universal Serial Bus (USB) drive, compact disk (CD) or digital versatile disk (DVD), or floppy disk drive), or any other desired storage medium. Instructions may also be stored in an attached (or internal) hard drive 2135. The computing device 2130 may also comprise a security processor (not shown), which may execute instructions of one or more computer programs to monitor the processes executing on the processor 2131 and any process that requests access to any hardware and/or software components of the computing device 2130 (e.g., ROM 2132, RAM 2133, the removable media 2134, the hard drive 2135, the device controller 2137, a network interface 2139, a GPS 2141, a Bluetooth interface 2142, a WiFi interface 2143, etc.). The computing device 2130 may comprise one or more output devices, such as the display 2136 (e.g., a screen, a display device, a monitor, a television, etc.), and may comprise one or more output device controllers 2137, such as a video processor. There may also be one or more user input devices 2138, such as a remote control, keyboard, mouse, touch screen, microphone, etc. The computing device 2130 may also comprise one or more network interfaces, such as a network interface 2139, which may be a wired interface, a wireless interface, or a combination of the two. The network interface 2139 may provide an interface for the computing device 2130 to communicate with a network 2140 (e.g., a RAN, or any other network). The network interface 2139 may comprise a modem (e.g.,

a cable modem), and the external network 2140 may comprise communication links, an external network, an in-home network, a provider's wireless, coaxial, fiber, or hybrid fiber/coaxial distribution system (e.g., a DOCSIS network), or any other desired network. Additionally, the computing device 2130 may comprise a location-detecting device, such as a global positioning system (GPS) microprocessor 2141, which may be configured to receive and process global positioning signals and determine, with possible assistance from an external server and antenna, a geographic position of the computing device 2130.

The example in FIG. 21 may be a hardware configuration, although the components shown may be implemented as software as well. Modifications may be made to add, remove, combine, divide, etc. components of the computing device 2130 as desired. Additionally, the components may be implemented using basic computing devices and components, and the same components (e.g., processor 2131, ROM storage 2132, display 2136, etc.) may be used to implement any of the other computing devices and components described herein. For example, the various components described herein may be implemented using computing devices having components such as a processor executing computer-executable instructions stored on a computer-readable medium, as shown in FIG. 21. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: transmitting, by an access point and to a station, a frame indicating a signal field value.

Clause 2. The method of clause 1, further comprising: receiving, from the station, a physical layer (PHY) protocol data unit (PPDU), wherein one or more signal fields of a PHY header of the PPDU comprise the signal field value.

Clause 3. The method of clause 1 or clause 2, wherein: based on a transmission mode being enabled, the one or more signal fields of the PHY header of the PPDU comprise the signal field value.

Clause 4. The method of any one of clauses 1 to 3, wherein: based on a received signal strength indicator (RSSI) value of the frame, the one or more signal fields of the PHY header of the PPDU comprise the signal field value.

Clause 5. The method of any one of clauses 1 to 4, wherein the frame comprises at least one of: a beacon frame; or an action frame.

Clause 6. The method of any one of clauses 1 to 5, wherein the frame indicates at least one of: an extended long range (ELR) operation mode for transmission of the PPDU; or a transmit power to be used to transmit the frame.

Clause 7. The method of any one of clauses 1 to 6, wherein the PPDU comprises: an extended long range (ELR) ultra-high reliability (UHR) PPDU format; or a high efficiency (HE) PPDU format.

Clause 8. The method of any one of clauses 1 to 7, wherein the one or more signal fields comprise at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field.

Clause 9. The method of any one of clauses 1 to 8, wherein the signal field value comprises at least one of: a reserved field; a PHY version independent field; or a PHY version dependent field.

Clause 10. The method of any one of clauses 1 to 9, wherein the signal field value comprises a value for at least one of: a universal signal field (U-SIG); a non-HT signal (L-SIG) field; or a repeated L-SIG (RL-SIG) field.

Clause 11. The method of any one of clauses 1 to 10, further comprising: estimating, based on the signal field value, a channel associated with receiving the PPDU.

Clause 12. The method of any one of clauses 1 to 11, further comprising: transmitting, to the station, a second frame indicating at least one of: an extended long range (ELR) operation mode for transmission of the PPDU; or a transmit power to be used for transmission of the second frame.

Clause 13. The method of any one of clauses 2 to 12, wherein the transmission mode is based on a received signal strength indicator (RSSI) value of the frame transmitted from the access point.

Clause 14. A computing device comprising: one or more processors; and memory storing instructions that, when executed by the one or more processors, cause the computing device to perform the method of any one of clauses 1 to 13.

Clause 15. A system comprising: an access point configured to perform the method of any one of clauses 1 to 13; and a station configured to receive the frame.

Clause 16. A computer-readable medium storing instructions that, when executed, cause performance of the method of any one of clauses 1 to 13.

Clause 17. A method comprising: transmitting, by an access point and to a station, a frame indicating a predetermined value.

Clause 18. The method of clause 17, further comprising: receiving, from the station, a physical layer protocol data unit (PPDU) that, based on a transmission mode being enabled, comprises the predetermined value.

Clause 19. The method of clause 17 or clause 18, further comprising: estimating, based on the predetermined value, a channel associated with receiving the PPDU.

Clause 20. The method of any one of clauses 17 to 19, further comprising: transmitting, to the station, a second frame indicating at least one of: an extended long range (ELR) operation mode for transmission of the PPDU; or a transmit power to be used for transmission of the second frame.

Clause 21. The method of any one of clauses 17 to 20, wherein the transmission mode is based on a received signal strength indicator (RSSI) value of the frame transmitted from the access point.

Clause 22. The method of any one of clauses 17 to 21, wherein the PPDU comprises: an extended long range (ELR) ultra-high reliability (UHR) PPDU format; or a high efficiency (HE) PPDU format.

Clause 23. The method of any one of clauses 17 to 22, wherein the predetermined value comprises a value for at least one of: a universal signal field (U-SIG); a non-HT signal (L-SIG) field; or a repeated L-SIG (RL-SIG) field.

Clause 24. The method of any one of clauses 17 to 23, wherein a physical layer (PHY) header of the PPDU comprises the predetermined value.

Clause 25. A computing device comprising: one or more processors; and memory storing instructions that, when executed by the one or more processors, cause the computing device to perform the method of any one of clauses 17 to 24.

Clause 26. A system comprising: an access point configured to perform the method of any one of clauses 17 to 24; and a station configured to receive the frame.

Clause 27. A computer-readable medium storing instructions that, when executed, cause performance of the method of any one of clauses 17 to 24.

Clause 28. A method comprising: receiving, by a station and from an access point, a frame indicating a signal field value.

Clause 29. The method of clause 28, further comprising: transmitting, to the access point, a physical layer (PHY) protocol data unit (PPDU), wherein one or more signal fields of a PHY header of the PPDU comprise the signal field value.

Clause 30. The method of clause 28 or clause 29, wherein: based on a transmission mode being enabled, the one or more signal fields of the PHY header of the PPDU comprise the signal field value.

Clause 31. The method of any one of clauses 28 to 30, wherein the frame indicates at least one of: an extended long range (ELR) operation mode for transmission of the PPDU; or a transmit power used to transmit the frame.

Clause 32. The method of any one of clauses 28 to 31, wherein the signal field value comprises a value for at least one of: a universal signal field (U-SIG); a non-HT signal (L-SIG) field; or a repeated L-SIG (RL-SIG) field.

Clause 33. A computing device comprising: one or more processors; and memory storing instructions that, when executed by the one or more processors, cause the computing device to perform the method of any one of clauses 28 to 32.

Clause 34. A system comprising: a station configured to perform the method of any one of clauses 28 to 32; and an access point configured to transmit the frame.

Clause 35. A computer-readable medium storing instructions that, when executed, cause performance of the method of any one of clauses 28 to 32.

Clause 36. A method comprising: transmitting, by an access point (AP) to a station (STA), a first frame indicating a value of a first signal field to be used in a physical layer (PHY) header of a PHY protocol data unit (PPDU) to be transmitted by the STA to the AP.

Clause 37. The method of clause 36, further comprising: receiving, by the AP from the STA, a first PPDU, wherein based on a received signal strength indicator (RSSI) value of a second frame received by the STA from the AP, a second signal field of the first PPDU comprises the value of the first signal field.

Clause 38. A method comprising: receiving, by an access point (AP) from a station (STA), a physical layer protocol data unit (PPDU), wherein based on a transmission mode being enabled, a signal field of the PPDU comprises a predetermined value.

Clause 39. The method of any one of clauses 36 to 38, wherein receiving the PPDU comprises receiving the PPDU via a channel from the STA to the AP.

Clause 40. The method of any one of clauses 36 to 39, further comprising estimating, by the AP, the channel based on the predetermined value.

Clause 41. The method of any one of clauses 36 to 40, wherein the estimating of the channel is further based on a long training field of the PPDU.

Clause 42. The method of any one of clauses 36 to 41, further comprising transmitting, by the AP to the STA, a first frame.

Clause 43. The method of any one of clauses 36 to 42, wherein the first frame comprises a beacon frame.

Clause 44. The method of any one of clauses 36 to 43, wherein the first frame comprises an action frame.

Clause 45. The method of any one of clauses 36 to 44, wherein the transmission mode comprises an extended long range (ELR) operation mode, and wherein the first frame comprises an indication to the STA of the ELR operation mode for transmission of the PPDU from the STA to the AP.

Clause 46. The method of any one of clauses 36 to 45, wherein the first frame comprises an ELR field, and wherein the ELR field comprises the indication of the ELR operation mode.

Clause 47. The method of any one of clauses 36 to 46, wherein the ELR operation mode comprises usage by the STA of an ELR PPDU format for the PPDU.

Clause 48. The method of any one of clauses 36 to 47, wherein the PPDU was received from the STA based on the first frame indicating the ELR operation mode.

Clause 49. The method of any one of clauses 36 to 48, wherein the first frame indicates a transmit power used to transmit the first frame.

Clause 50. The method of any one of clauses 36 to 49, wherein the first frame comprises a transmit power field, and wherein the transmit power field indicates the transmit power.

Clause 51. The method of any one of clauses 36 to 50, wherein a PPDU format of the PPDU comprises an extended long range (ELR) ultra-high reliability (UHR) PPDU format.

Clause 52. The method of any one of clauses 36 to 51, wherein the signal field comprises at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field

Clause 53. The method of any one of clauses 36 to 52, wherein the U-SIG field comprises a plurality of orthogonal frequency division multiplexing (OFDM) symbols.

Clause 54. The method of any one of clauses 36 to 53, wherein the plurality of OFDM symbols comprises 4 OFDM symbols.

Clause 55. The method of any one of clauses 36 to 54, wherein the signal field comprises a non-high throughput (non-HT) signal field (L-SIG).

Clause 56. The method of any one of clauses 36 to 55, wherein based on the signal field comprising the L-SIG, a length/duration of the PPDU is pre-determined.

Clause 57. The method of any one of clauses 36 to 56, further comprising transmitting, by the AP to the STA, a second frame indicating a value of the signal field.

Clause 58. The method of any one of clauses 36 to 57, wherein the first frame comprises the second frame.

Clause 59. The method of any one of clauses 36 to 58, wherein based on receiving the second frame, the transmitting of the PPDU comprises transmitting the PPDU with the predetermined value, and wherein the predetermined value comprises the value.

Clause 60. The method of any one of clauses 36 to 59, wherein the value comprises a reserved field.

Clause 61. The method of any one of clauses 36 to 60, wherein the value comprises a PHY version independent field.

Clause 62. The method of any one of clauses 36 to 61, wherein the value comprises a PHY version dependent field.

Clause 63. The method of any one of clauses 36 to 62, wherein a PPDU format of the PPDU comprises a high efficiency (HE) PPDU format.

Clause 64. The method of any one of clauses 36 to 63, wherein the signal field comprises an HE-SIG-A field.

Clause 65. The method of any one of clauses 36 to 64, wherein the HE-SIG-A field comprises 4 OFDM symbols.

Clause 66. The method of any one of clauses 36 to 65, wherein the signal field comprises the L-SIG.

Clause 67. The method of any one of clauses 36 to 66, wherein the predetermined value is comprised in a physical layer (PHY) header of the PPDU.

Clause 68. The method of any one of clauses 36 to 67, wherein the PPDU comprises an ELR PPDU, and wherein the PHY header comprises a legacy header of the ELR PPDU.

Clause 69. The method of any one of clauses 36 to 68, wherein the transmission mode is based on a received signal strength indicator (RSSI) value of a frame received by the STA from the AP.

Clause 70. The method of any one of clauses 36 to 69, wherein the predetermined value comprises values for one or more of: a universal signal field (U-SIG), a non-HT signal (L-SIG) field; or a repeated L-SIG (RL-SIG) field.

Clause 71. The method of any one of clauses 36 to 70, wherein the values comprise multiple values for the U-SIG field.

Clause 72. A computing device comprising: one or more processors; and memory storing instructions that, when executed by the one or more processors, cause the computing device to perform the method of any one of clauses 36 to 71.

Clause 73. A system comprising: an access point configured to perform the method of any one of clauses 36 to 71; and a station configured to receive the frame.

Clause 74. A computer-readable medium storing instructions that, when executed, cause performance of the method of any one of clauses 36 to 71.

Clause 75. A method comprising: receiving, by a station (STA) from an access point (AP), a first frame indicating a value of a first signal field to be used in a physical layer (PHY) header of a PHY protocol data unit (PPDU) to be transmitted by the STA to the AP.

Clause 76. The method of clause 75, further comprising: transmitting, by the STA to the AP, a first PPDU, wherein based on a received signal strength indicator (RSSI) value of a second frame received by the STA from the AP, a second signal field of the first PPDU comprises the value of the first signal field.

Clause 77. A method comprising: transmitting, by a station (STA) to an access point (AP), a physical layer protocol data unit (PPDU), wherein based on a transmission mode being enabled, a signal field of the PPDU comprises a predetermined value.

Clause 78. The method of any one of clauses 75 to 77, wherein transmitting the PPDU comprises transmitting the PPDU via a channel from the STA to the AP.

Clause 79. The method of any one of clauses 75 to 78, further comprising enabling the transmission mode based on an RSSI being greater than a first threshold.

Clause 80. The method of any one of clauses 75 to 79, wherein the first threshold comprises -82 dBm.

Clause 81. The method of any one of clauses 75 to 80, further comprising enabling the transmission mode based on a path loss of the channel from the AP to the STA.

Clause 82. The method of any one of clauses 75 to 81, wherein path loss comprises a transmit power subtracted from a received signal strength indication (RSSI) of the first frame.

Clause 83. The method of any one of clauses 75 to 82, wherein the transmission mode is enabled based on the path loss being above a second threshold.

Clause 84. The method of any one of clauses 75 to 83, wherein the channel was estimated by the AP based on the predetermined value.

Clause 85. The method of any one of clauses 75 to 84, further comprising receiving, by the STA from the AP, a first frame.

Clause 86. The method of any one of clauses 75 to 85, wherein the first frame comprises a beacon frame.

Clause 87. The method of any one of clauses 75 to 86, wherein the first frame comprises an action frame.

Clause 88. The method of any one of clauses 75 to 87, wherein the first frame comprises an indication of an extended long range (ELR) operation mode for transmission of the PPDU from the STA to the AP.

Clause 89. The method of any one of clauses 75 to 88, wherein the first frame comprises an ELR field, and wherein the ELR field comprises the indication of the ELR operation mode.

Clause 90. The method of any one of clauses 75 to 89, wherein the ELR operation mode comprises usage by the STA of an ELR PPDU format for the PPDU.

Clause 91. The method of any one of clauses 75 to 90, wherein the transmitting of the PPDU comprises transmitting the PPDU based on the first frame indicating the ELR operation mode.

Clause 92. The method of any one of clauses 75 to 91, wherein the first frame indicates a transmit power used to transmit the first frame.

Clause 93. The method of any one of clauses 75 to 92, wherein the first frame comprises a transmit power field, and wherein the transmit power field indicates the transmit power.

Clause 94. The method of any one of clauses 75 to 93, wherein a PPDU format of the PPDU comprises an extended long range (ELR) ultra-high reliability (UHR) PPDU format.

Clause 95. The method of any one of clauses 75 to 94, wherein the signal field comprises at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field

Clause 96. The method of any one of clauses 75 to 95, wherein the U-SIG field comprises a plurality of orthogonal frequency division multiplexing (OFDM) symbols.

Clause 97. The method of any one of clauses 75 to 96, wherein the plurality of OFDM symbols comprises 4 OFDM symbols.

Clause 98. The method of any one of clauses 75 to 97, wherein the signal field comprises a non-high throughput (non-HT) signal field (L-SIG).

Clause 99. The method of any one of clauses 75 to 98, wherein based on the signal field comprising the L-SIG, a length/duration of the PPDU is pre-determined.

Clause 100. The method of any one of clauses 75 to 99, further comprising receiving, by the STA from the AP, a second frame indicating a value of the signal field.

Clause 101. The method of any one of clauses 75 to 100, wherein the first frame comprises the second frame.

Clause 102. The method of any one of clauses 75 to 101, wherein based on receiving the second frame, the transmitting of the PPDU comprises transmitting the PPDU with the predetermined value, and wherein the predetermined value comprises the value.

Clause 103. The method of any one of clauses 75 to 102, wherein the value comprises a reserved field.

Clause 104. The method of any one of clauses 75 to 103, wherein the value comprises a PHY version independent field.

Clause 105. The method of any one of clauses 75 to 104, wherein the value comprises a PHY version dependent field.

Clause 106. The method of any one of clauses 75 to 105, wherein a PPDU format of the PPDU comprises a high efficiency (HE) PPDU format.

Clause 107. The method of any one of clauses 75 to 106, wherein the signal field comprises an HE-SIG-A field.

Clause 108. The method of any one of clauses 75 to 107, wherein the HE-SIG-A field comprises 4 OFDM symbols.

Clause 109. The method of any one of clauses 75 to 108, wherein the signal field comprises the L-SIG field.

Clause 110. The method of any one of clauses 75 to 109, wherein the predetermined value is comprised in a physical layer (PHY) header of the PPDU.

Clause 111. The method of any one of clauses 75 to 110, wherein the PPDU comprises an ELR PPDU, and wherein the PHY header comprises a legacy header of the ELR PPDU.

Clause 112. The method of any one of clauses 75 to 111, wherein the transmission mode is based on a received signal strength indicator (RSSI) value of a frame received by the STA from the AP.

Clause 113. The method of any one of clauses 75 to 112, wherein the predetermined value comprises values for one or more of: a universal signal field (U-SIG), a non-HT signal (L-SIG) field; or a repeated L-SIG (RL-SIG) field.

Clause 114. The method of any one of clauses 75 to 113, wherein the values comprise multiple values for the U-SIG field.

Clause 115. A computing device comprising: one or more processors; and memory storing instructions that, when executed by the one or more processors, cause the computing device to perform the method of any one of clauses 75 to 114.

Clause 116. A system comprising: a station configured to perform the method of any one of clauses 75 to 114; and an access point configured to transmit the frame.

Clause 117. A computer-readable medium storing instructions that, when executed, cause performance of the method of any one of clauses 75 to 114.

An access point may perform a method comprising one or more operations. The access point may transmit, to a station, a frame indicating a signal field value. The access point may receive, from the station, a physical layer (PHY) protocol data unit (PPDU). One or more signal fields of a PHY header of the PPDU may comprise the signal field value. Based on a transmission mode being enabled, the one or more signal fields of the PHY header of the PPDU may comprise the signal field value. Based on a received signal strength indicator (RSSI) value of the frame, the one or more signal fields of the PHY header of the PPDU may comprise the signal field value. The frame may comprise at least one of: a beacon frame; or an action frame. The frame may indicate at least one of: an extended long range (ELR) operation mode for transmission of the PPDU; or a transmit power to be used to transmit the frame. The PPDU may comprise: an extended long range (ELR) ultra-high reliability (UHR) PPDU format; or a high efficiency (HE) PPDU format. The one or more signal fields may comprise at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field. The signal field value may comprise at least one of: a reserved field; a PHY version independent field; or a PHY version dependent field. The signal field value may comprise a value for at least one of: a universal signal field (U-SIG); a non-HT signal (L-SIG) field; or a repeated L-SIG (RL-SIG) field. The access point may estimate, based on the signal field value, a channel associated with receiving the PPDU. The access point may transmit, to the station, a second frame indicating at least one of: an extended long range (ELR) operation mode for transmission of the PPDU; or a transmit power to be used for transmission of the second frame. The transmission mode may be based on a received signal strength indicator (RSSI) value of the frame transmitted from the access point. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to receive the frame. A computer-readable medium may store instructions that, when executed, cause performance of the described method, additional operations, and/or include the additional elements.

An access point may perform a method comprising one or more operations. The access point may transmit, to a station, a frame indicating a predetermined value. The access point may receive, from the station, a physical layer protocol data unit (PPDU). Based on a transmission mode being enabled, the PPDU may comprise the predetermined value. The access point may estimate, based on the predetermined value, a channel associated with receiving the PPDU. The access point may transmit, to the station, a second frame indicating at least one of: an extended long range (ELR) operation mode for transmission of the PPDU; or a transmit power to be used for transmission of the second frame. The transmission mode may be based on a received signal strength indicator (RSSI) value of the frame transmitted from the access point. The PPDU may comprise: an extended long range (ELR) ultra-high reliability (UHR) PPDU format; or a high efficiency (HE) PPDU format. The predetermined value may comprise a value for at least one of: a universal signal field (U-SIG); a non-HT signal (L-SIG) field; or a repeated L-SIG (RL-SIG) field. A physical layer (PHY) header of the PPDU may comprise the predetermined value. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to receive the frame. A computer-readable medium may store instructions that, when executed, cause performance of the described method, additional operations, and/or include the additional elements.

A station may perform a method comprising one or more operations. The station may receive, from an access point, a frame indicating a signal field value. The station may transmit, to the access point, a physical layer (PHY) protocol data unit (PPDU). One or more signal fields of a PHY header of the PPDU may comprise the signal field value. Based on a transmission mode being enabled, the one or more signal fields of the PHY header of the PPDU may comprise the signal field value. The frame may indicate at least one of: an extended long range (ELR) operation mode for transmission of the PPDU; or a transmit power used to transmit the frame. The signal field value may comprise a value for at least one of: a universal signal field (U-SIG); a non-HT signal (L-SIG) field; or a repeated L-SIG (RL-SIG) field. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to transmit the frame. A computer-readable medium may store instructions that, when executed, cause performance of the described method, additional operations, and/or include the additional elements.

An access point may perform a method comprising one or more operations. The access point (AP) may may transmit, to a station (STA), a first frame indicating a value of a first signal field to be used in a physical layer (PHY) header of a PHY protocol data unit (PPDU) to be transmitted by the STA to the AP. The AP may receive, by the AP from the STA, a first PPDU. Based on a received signal strength indicator (RSSI) value of a second frame received by the STA from the AP, a second signal field of the first PPDU may comprise the value of the first signal field. An access point (AP) may receive, from a station (STA), a physical layer protocol data unit (PPDU). Based on a transmission mode being enabled, a signal field of the PPDU may comprise a predetermined value. Receiving the PPDU may comprise receiving the PPDU via a channel from the STA to the AP. The AP may estimate the channel based on the predetermined value. The estimating of the channel may be further based on a long training field of the PPDU. The AP may transmit, to the STA, a first frame. The first frame may comprise a beacon frame. The first frame may comprise an action frame. The transmission mode may comprise an extended long range (ELR) operation mode, and the first frame may comprise an indication to the STA of the ELR operation mode for transmission of the PPDU from the STA to the AP. The first frame may comprise an ELR field, and the ELR field may comprise the indication of the ELR operation mode. The ELR operation mode may comprise usage by the STA of an ELR PPDU format for the PPDU. The PPDU may be received from the STA based on the first frame indicating the ELR operation mode. The first frame may indicate a transmit power used to transmit the first frame. The first frame may comprise a transmit power field, and the transmit power field may indicate the transmit power. A PPDU format of the PPDU may comprise an extended long range (ELR) ultra-high reliability (UHR) PPDU format. The signal field may comprise at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field. The U-SIG field may comprise a plurality of orthogonal frequency division multiplexing (OFDM) symbols. The plurality of OFDM symbols may comprise 4 OFDM symbols. The signal field may comprise a non-high throughput (non-HT) signal field (L-SIG). Based on the signal field comprising the L-SIG, a length/duration of the PPDU may be pre-determined. The AP may transmit, to the STA, a second frame indicating a value of the signal field. The first frame may comprise the second frame. Based on receiving the second frame, the transmitting of the PPDU may comprise transmitting the PPDU with the predetermined value, and the predetermined value may comprise the value. The value may comprise a reserved field. The value may comprise a PHY version independent field. The value may comprise a PHY version dependent field. A PPDU format of the PPDU may comprise a high efficiency (HE) PPDU format. The signal field may comprise an HE-SIG-A field. The HE-SIG-A field may comprise 4 OFDM symbols. The signal field may comprise the L-SIG. The predetermined value may be comprised in a physical layer (PHY) header of the PPDU. The PPDU may comprise an ELR PPDU, and the PHY header may comprise a legacy header of the ELR PPDU. The transmission mode may be based on a received signal strength indicator (RSSI) value of a frame received by the STA from the AP. The predetermined value may comprise values for one or more of: a universal signal field (U-SIG), a non-HT signal (L-SIG) field; or a repeated L-SIG (RL-SIG) field. The values may comprise multiple values for the U-SIG field. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to receive the frame. A computer-readable medium may store instructions that, when executed, cause performance of the described method, additional operations, and/or include the additional elements.

A station may perform a method comprising one or more operations. The station (STA) may receive, from an access point (AP), a first frame indicating a value of a first signal field to be used in a physical layer (PHY) header of a PHY protocol data unit (PPDU) to be transmitted by the STA to the AP. The STA may transmit, to the AP, a first PPDU. Based on a received signal strength indicator (RSSI) value of a second frame received by the STA from the AP, a second signal field of the first PPDU may comprise the value of the first signal field. A station (STA) may transmit, to an access point (AP), a physical layer protocol data unit (PPDU). Based on a transmission mode being enabled, a signal field of the PPDU may comprise a predetermined value. Transmitting the PPDU may comprise transmitting the PPDU via a channel from the STA to the AP. The STA may enable the transmission mode based on an RSSI being greater than a first threshold. The first threshold may comprise -82 dBm. The STA may enable the transmission mode based on a path loss of the channel from the AP to the STA. The path loss may comprise a transmit power subtracted from a received signal strength indication (RSSI) of the first frame. The transmission mode may be enabled based on the path loss being above a second threshold. The channel may be estimated by the AP based on the predetermined value. The STA may receive, from the AP, a first frame. The first frame may comprise a beacon frame. The first frame may comprise an action frame. The first frame may comprise an indication of an extended long range (ELR) operation mode for transmission of the PPDU from the STA to the AP. The first frame may comprise an ELR field, and the ELR field may comprise the indication of the ELR operation mode. The ELR operation mode may comprise usage by the STA of an ELR PPDU format for the PPDU. The transmitting of the PPDU may comprise transmitting the PPDU based on the first frame indicating the ELR operation mode. The first frame may indicate a transmit power used to transmit the first frame. The first frame may comprise a transmit power field, and the transmit power field may indicate the transmit power. A PPDU format of the PPDU may comprise an extended long range (ELR) ultra-high reliability (UHR) PPDU format. The signal field may comprise at least one of: a non-high throughput (non-HT) short training field (L-STF); a non-HT long training field (L-LTF); a non-HT signal (L-SIG) field; a repeated L-SIG (RL-SIG) field; or a universal signal (U-SIG) field The U-SIG field may comprise a plurality of orthogonal frequency division multiplexing (OFDM) symbols. The plurality of OFDM symbols may comprise 4 OFDM symbols. The signal field may comprise a non-high throughput (non-HT) signal field (L-SIG). Based on the signal field comprising the L-SIG, a length/duration of the PPDU may be pre-determined. The STA may receive, from the AP, a second frame indicating a value of the signal field. The first frame may comprise the second frame. Based on receiving the second frame, the transmitting of the PPDU may comprise transmitting the PPDU with the predetermined value, and the predetermined value may comprise the value. The value may comprise a reserved field. The value may comprise a PHY version independent field. The value may comprise a PHY version dependent field. A PPDU format of the PPDU may comprise a high efficiency (HE) PPDU format. The signal field may comprise an HE-SIG-A field. The HE-SIG-A field may comprise 4 OFDM symbols. The signal field may comprise the L-SIG field. The predetermined value may be comprised in a physical layer (PHY) header of the PPDU. The PPDU may comprise an ELR PPDU, and the PHY header may comprise a legacy header of the ELR PPDU. The transmission mode may be based on a received signal strength indicator (RSSI) value of a frame received by the STA from the AP. The predetermined value may comprise values for one or more of: a universal signal field (U-SIG), a non-HT signal (L-SIG) field; or a repeated L-SIG (RL-SIG) field. The values may comprise multiple values for the U-SIG field. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to transmit the frame. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, MatLab or the like) or a modeling/simulation program such as Simulink, Stateflow, GNU Octave, or LabVIEW MathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

    transmitting, by an access point and to a station, a frame indicating a signal field value; and
    receiving, from the station, a physical layer (PHY) protocol data unit (PPDU), wherein one or more signal fields of a PHY header of the PPDU comprise the signal field value.

2. The method of claim 1, wherein:
    based on a transmission mode being enabled, the one or more signal fields of the PHY header of the PPDU comprise the signal field value.

3. The method of claim 1 or claim 2, wherein:
    based on a received signal strength indicator (RSSI) value of the frame, the one or more signal fields of the PHY header of the PPDU comprise the signal field value.

4. The method of any one of claims 1 to 3, wherein the frame comprises at least one of:

    a beacon frame; or
    an action frame.

5. The method of any one of claims 1 to 4, wherein the frame indicates at least one of:

    an extended long range (ELR) operation mode for transmission of the PPDU; or
    a transmit power to be used to transmit the frame.

6. The method of any one of claims 1 to 5, wherein the PPDU comprises:

    an extended long range (ELR) ultra-high reliability (UHR) PPDU format; or
    a high efficiency (HE) PPDU format.

7. The method of any one of claims 1 to 6, wherein the one or more signal fields comprise at least one of:

    a non-high throughput (non-HT) short training field (L-STF);
    a non-HT long training field (L-LTF);
    a non-HT signal (L-SIG) field;
    a repeated L-SIG (RL-SIG) field; or
    a universal signal (U-SIG) field.

8. The method of any one of claims 1 to 7, wherein the signal field value comprises at least one of:

    a reserved field;
    a PHY version independent field; or
    a PHY version dependent field.

9. The method of any one of claims 1 to 8, wherein the signal field value comprises a value for at least one of:

    a universal signal field (U-SIG);
    a non-HT signal (L-SIG) field; or
    a repeated L-SIG (RL-SIG) field.

10. The method of any one of claims 1 to 9, further comprising:
    estimating, based on the signal field value, a channel associated with receiving the PPDU.

11. The method of any one of claims 1 to 10, further comprising:
    transmitting, to the station, a second frame indicating at least one of:

    an extended long range (ELR) operation mode for transmission of the PPDU; or
    a transmit power to be used for transmission of the second frame.

**12.** The method of any one of claims 2 to 11, wherein the transmission mode is based on a received signal strength indicator (RSSI) value of the frame transmitted from the access point.

**13.** A computing device comprising:

   one or more processors; and
   memory storing instructions that, when executed by the one or more processors, cause the computing device to perform the method of any one of claims 1 to 12.

**14.** A system comprising:

   an access point configured to perform the method of any one of claims 1 to 12; and
   a station configured to receive the frame.

**15.** A computer-readable medium storing instructions that, when executed, cause performance of the method of any one of claims 1 to 12.

FIG. 1

EP 4 672 688 A1

FIG. 2

310

4μs per symbol

| 8μs | 8μs | 4μs | |
|-----|-----|-----|---|
| L-STF | L-LTF | L-SIG | DATA |

NON-HT PPDU

320

3.6μs or 4μs per symbol          3.6μs or 4μs per symbol

| 8μs | 8μs | 4μs | 8μs:4μs per symbol | 4μs | | | | |
|-----|-----|-----|-----|-----|-----|---|---|---|
| L-STF | L-LTF | L-SIG | HT-SIG | HT-STF | HT-LTF | — — — | HT-LTF | DATA |

HT MIXED MODE PPDU

330

3.6μs or 4μs per symbol          3.6μs or 4μs per symbol

| 8μs | 8μs | 4μs | 8μs:4μs per symbol | 4μs | | | | | |
|-----|-----|-----|-----|-----|-----|---|---|---|---|
| L-STF | L-LTF | L-SIG | VHT-SIG-A | VHT-STF | VHT-LTF | — — — | VHT-LTF | VHT-SIG-B | DATA |

VHT PPDU

**FIG. 3**

EP 4 672 688 A1

400

**410**

| L-STF | L-LTF | L-SIG | RL-SIG | HE-SIG-A | HE-STF | HE-LTF | ... | HE-LTF | DATA | PE |

8μs | 8μs | 4μs | 4μs | 8μs | 4μs | Variable durations per HE-LTF symbol

**HE SU PPDU**

**420**

| L-STF | L-LTF | L-SIG | RL-SIG | HE-SIG-A | HE-SIG-B | HE-STF | HE-LTF | ... | HE-LTF | DATA | PE |

8μs | 8μs | 4μs | 4μs | 8μs | 4μs per symbol | Variable durations per HE-LTF symbol

**HE MU PPDU**

**430**

| L-STF | L-LTF | L-SIG | RL-SIG | HE-SIG-A | HE-STF | HE-LTF | ... | HE-LTF | DATA | PE |

8μs | 8μs | 4μs | 4μs | 16μs | 4μs | Variable durations per HE-LTF symbol

**HE ER SU PPDU**

**FIG. 4**

500

510

EHT-LTF and DATA symbol duration dependdepends on the GI
+LTF size

| L-STF | L-LTF | L-SIG | RL-SIG | U-SIG | EHT-SIG | EHT-STF | EHT-LTF | ... | EHT-LTF | DATA | PE |

8µs | 8µs | 4µs | 4µs | 8µs:4µs per symbol | 4µs per symbol | 4µs

EHT MU PPDU

FIG. 5

EP 4 672 688 A1

600

| 4μs | 4μs | 4μs | 4μs |
|---|---|---|---|
| U-SIG-1 | U-SIG-1 | U-SIG-2 | U-SIG-2 |

602-1    602-2    602-3    602-4

**FIG. 6**

EP 4 672 688 A1

Octets:

| 2 | 2 | 6 | 6 | 6 | 2 | 0 or 4 | variable | 4 | |
|---|---|---|---|---|---|---|---|---|---|
| Frame Control | Duration | Address 1 | Address 2 | Address 3 | Sequence Control | HT Control | Frame Body | FCS | Management frame format |

MAC Header

| Action | ... | Vendor Specific elements | MME | MIC | Authenticated Mesh Peering Exchange | Action frame format |
|---|---|---|---|---|---|---|

**FIG. 7**

800

| CATEGORY | RADIO MEASUREMENT ACTION | DIALOG TOKEN | TRANSMIT POWER USED | MAX TRANSMIT POWER | EXTENDED LINK MEASUREMENT |
|---|---|---|---|---|---|

FIG. 8

| Frame Control | Duration | RA | TA | Common Info | User List Info | Padding Info | FCS |
|---|---|---|---|---|---|---|---|

900

| User Info Field | User Info Field | — | User Info Field |
|---|---|---|---|

| AID12 | RU Allocation | UL FEC Coding Type | UL HE-MCS | UL DCM | SS Allocation/R A-RU Information | UL Target Receive Power | Reserved | Trigger Dependent User Info |
|---|---|---|---|---|---|---|---|---|

**FIG. 9**

EP 4 672 688 A1

| B0   B3 | B4   B15 | B16 | B17 | B18   B19 | B20                                                B21 | B22 | B23                            B25 |
|---------|----------|-----|-----|-----------|---------------------------------------------------------|-----|------------------------------------|
| Trigger Type | UL Length | More TF | CS Required | UL BW | GI And HE/EHT-LTF Type/Triggered TXOP Sharing Mode | Reserved | Number of HE/EHT-LTF Symbols |

Bits: 4 · 12 · 1 · 1 · 2 · 2 · 1 · 3

| B26 | B27 | B28   B33 | B34   B35 | B36 | B37   B52 | B53 | B54 |
|-----|-----|-----------|-----------|-----|-----------|-----|-----|
| Reserved | LDPC Extra Symbol Segment | Ap Tx Power | Pre-FEC Padding Factor | PE Disambiguity | UL Spatial Reuse | Reserved | HE/EHT P160 |

Bits: 1 · 1 · 6 · 2 · 1 · 16 · 1 · 1

| B55 | B56   B62 | B63 | |
|-----|-----------|-----|---|
| Special User Info Field Flag | EHT Reserved | Reserved | Trigger Dependent Common Info |

Bits: 1 · 7 · 1 · variable

**FIG. 10**

FIG. 11

**1200**

FIG. 12

EP 4 672 688 A1

1300

| LEGACY PREAMBLE 1302 | ELR PREAMBLE 1304 | ELR DATA 1306 |
|---|---|---|

**FIG. 13**

1400

| L-STF | L-LTF | L-SIG | RL-SIG | U-SIG1 | U-SIG2 |
|-------|-------|-------|--------|--------|--------|

LEGACY PREAMBLE

**FIG. 14**

1500

STA
1502

STA
1504

ELR PPDU 1506

OVERHEAD 1598

**FIG. 15**

1600

LEGACY PREAMBLE
1602

| L-STF | L-LTF | L-SIG | RL-SIG | U-SIG | ELR-SIG |

1612

ELR DATA
1606

| ELR-STF 1608 | ELR-LTF 1610 |

ELR PREAMBLE
1604

ELR PPDU

**FIG. 16**

EP 4 672 688 A1

FIG. 17

EP 4 672 688 A1

EP 4 672 688 A1

| ELR MODE | TRANSMIT POWER USED | U-SIG/HE-SIG-A VALUE | L-SIG VALUE |
|---|---|---|---|

ELR FIELD

**FIG. 18**

1900

RECEIVING, BY AN ACCESS POINT (AP) FROM A STATION (STA), A PHYSICAL LAYER PROTOCOL DATA UNIT (PPDU), WHERE BASED ON A TRANSMISSION MODE BEING ENABLED, A SIGNAL FIELD OF THE PPDU MAY COMPRISE A PREDETERMINED VALUE

1902

**FIG. 19**

EP 4 672 688 A1

TRANSMITTING, BY A STATION (STA) TO AN ACCESS POINT (AP), A PHYSICAL LAYER PROTOCOL DATA UNIT (PPDU), WHEREIN BASED ON A TRANSMISSION MODE BEING ENABLED, A SIGNAL FIELD OF THE PPDU COMPRISES A PREDETERMINED VALUE

2000

2002

**FIG. 20**

Display
2136

2130

Network
2140

Device
Controller
2137

Network
I/O
2139

ROM
2132

Removable
Media
2134

Processor
2131

RAM
2133

GPS
2141

Hard Drive
2135

WiFi
2143

Bluetooth
2142

2138

FIG. 21

| | Europäisches Patentamt European Patent Office Office européen des brevets | **EUROPEAN SEARCH REPORT** | **Application Number** EP 25 18 5130 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/315681 A1 (MOON SUNGHO [US] ET AL) 27 October 2016 (2016-10-27) | 1,2,4, 7-9, 13-15 | INV. H04L27/26 H04W84/12 |
| Y | * paragraph [0101] - paragraph [0107] * ----- | 3,5,6, 10-12 | |
| Y | US 2015/282043 A1 (FANG YONGGANG [US] ET AL) 1 October 2015 (2015-10-01) * paragraph [0081] - paragraph [0089] * ----- | 3,12 | |
| Y | US 2023/247530 A1 (CARIOU LAURENT [FR] ET AL) 3 August 2023 (2023-08-03) * paragraph [0034] - paragraph [0042] * ----- | 5,6,11 | |
| Y | US 2015/139206 A1 (AZIZI SHAHRNAZ [US] ET AL) 21 May 2015 (2015-05-21) * paragraph [0036] - paragraph [0040] * ----- | 10 | |
| A | US 2023/023324 A1 (FANG JUAN [US] ET AL) 26 January 2023 (2023-01-26) * paragraph [0065] - paragraph [0070] * ----- | 1-15 | TECHNICAL FIELDS SEARCHED (IPC) H04L H04W |

The present search report has been drawn up for all claims

| Place of search | Date of completion of the search | Examiner |
|---|---|---|
| Berlin | 5 November 2025 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 5130

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | | | Publication date | Patent family member(s) | | Publication date |
|---|---|---|---|---|---|---|
| US 2016315681 | A1 | | 27-10-2016 | EP 3286857 | A1 | 28-02-2018 |
| | | | | EP 3982553 | A1 | 13-04-2022 |
| | | | | US 2016315681 | A1 | 27-10-2016 |
| | | | | US 2017201305 | A1 | 13-07-2017 |
| | | | | WO 2016172620 | A1 | 27-10-2016 |
| US 2015282043 | A1 | | 01-10-2015 | CN 104954297 | A | 30-09-2015 |
| | | | | US 2015282043 | A1 | 01-10-2015 |
| US 2023247530 | A1 | | 03-08-2023 | CN 118741772 | A | 01-10-2024 |
| | | | | US 2023247530 | A1 | 03-08-2023 |
| US 2015139206 | A1 | | 21-05-2015 | CN 105637968 | A | 01-06-2016 |
| | | | | CN 105659656 | A | 08-06-2016 |
| | | | | CN 105706407 | A | 22-06-2016 |
| | | | | CN 105900511 | A | 24-08-2016 |
| | | | | CN 105917611 | A | 31-08-2016 |
| | | | | CN 106100807 | A | 09-11-2016 |
| | | | | CN 107947850 | A | 20-04-2018 |
| | | | | EP 3072255 | A1 | 28-09-2016 |
| | | | | EP 3072324 | A1 | 28-09-2016 |
| | | | | EP 3072345 | A1 | 28-09-2016 |
| | | | | EP 3072347 | A1 | 28-09-2016 |
| | | | | EP 3101833 | A1 | 07-12-2016 |
| | | | | EP 3373501 | A1 | 12-09-2018 |
| | | | | US 2015139091 | A1 | 21-05-2015 |
| | | | | US 2015139118 | A1 | 21-05-2015 |
| | | | | US 2015139206 | A1 | 21-05-2015 |
| | | | | US 2016211944 | A1 | 21-07-2016 |
| | | | | US 2016211961 | A1 | 21-07-2016 |
| | | | | US 2016241366 | A1 | 18-08-2016 |
| | | | | US 2017135035 | A1 | 11-05-2017 |
| | | | | US 2018109365 | A1 | 19-04-2018 |
| | | | | WO 2015076923 | A1 | 28-05-2015 |
| | | | | WO 2015076932 | A1 | 28-05-2015 |
| | | | | WO 2015077040 | A1 | 28-05-2015 |
| | | | | WO 2015077042 | A1 | 28-05-2015 |
| | | | | WO 2015077049 | A1 | 28-05-2015 |
| US 2023023324 | A1 | | 26-01-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63663918